# EUROPÄISCHE PATENTSCHRIFT

(11) **EP 2 196 410 B1**
(45) Veröffentlichungstag und Bekanntmachung des Hinweises auf die Patenterteilung: **07.09.2011**
(21) Anmeldenummer: 09178509.7
(22) Anmeldetag: 09.12.2009
(51) Int. Cl.: B65D 90/34, F16K 24/00

(54) **Be- und Entlüftungsventil, Brennfluidtank mit einem solchen Ventil und Verfahren zur Be- und Entlüftung eines Brennfluidtanks**
Venting and aerating valve, combustible fluid tank with such a valve and method for venting a combustible fluid tank
Soupape d'aération, réservoir de fluide combustible doté d'une telle soupape et procédé d'aération d'un réservoir de fluide combustible

(30) Priorität: 11.12.2008 DE 102008061283
(43) Veröffentlichungstag der Anmeldung: 16.06.2010
(73) Patentinhaber: InnovaTUN GmbH, 65326 Aarbergen (DE)
(72) Erfinder: Bach, Volker, 65326 Aarbergen (DE)
(74) Vertreter: Holzwarth-Rochford, Andreas

(56) Entgegenhaltungen:
- FR-A1- 2 625 284
- GB-A- 2 209 583
- US-A- 3 693 644
- US-A- 3 929 158
- US-A- 5 623 958

## Beschreibung

Die vorliegende Erfindung betrifft ein Be- und Entlüftungsventil gemäß dem Oberbegriff des Patentanspruchs 1.

Ein Be- und Entlüftungsventil ist beispielsweise aus der DE 37 31 958 A1, die eine Vorrichtung zur Entlüftung von Öl für Ölfeuerungsanlagen offenbart, bekannt. Die Vorrichtung wird in einer Öl-Entnahmeleitung eines Heizöltanks zu einem Vorlauf eines Brenners angeordnet. In die Vorrichtung mündet ferner ein Ölrücklauf von dem Brenner, wobei das über den Ölrücklauf der Vorrichtung zugeführte Öl einer Kammer zugeführt wird, in der ein Schwimmer angeordnet ist. Die Kammer weist eine Entlüftungsöffnung auf, die in Abhängigkeit von der Position des Schwimmers geöffnet, bzw. geschlossen wird und ein Membranventil, über welches das in der Kammer gesammelte Öl wieder dem Vorlauf zu dem Brenner zugeführt werden kann. Diese Vorrichtung dient ausschließlich der Entlüftung von aus einem Heizöltank entnommenem Öl, um insbesondere in dem Heizöl eingeschlossene Luftblasen aufzulösen.

Darüber hinaus sind aus dem Stand der Technik Lüftungseinrichtungen für Brennfluidtanks, insbesondere Heizöltanks, bekannt. Die DE 38 21 331 C2 offenbart eine Lüftungseinrichtung für einen, vorzugsweise aus Kunststoff gefertigten Öltank. Ein Ölrücklauffilter ist an einer Tanköffnung angeordnet und über den Ölrücklauffilter kann Öl nach einer entsprechenden Filterung in den Tank zurückströmen. Beim Zurückströmen von Öl in den Tank entweicht die aus dem Tank verdrängte Luft über einen Luftfilter an dem Ölrücklauffilter und bei einer Entnahme von Öl aus dem Tank strömt durch den Filter Luft nach.

Die DE 44 07 177 A1 offenbart einen Öl-Tank-Belüftungsfilter. Um eine Be- und Entlüftung des Öl-Tanks bei einer Befüllung und Entleerung desselben zu ermöglichen, ist der Öl-Tank über einen Filter mit einer Umgebungsatmosphäre verbunden. Der Filter dient dazu, dass ölbeladene Luft derartig gefiltert wird, dass in der Luft mitgerissene Ölpartikel an dem Filter abgeschieden werden,

Die EP 0 512 639 Bl offenbart einen Rückflussfilter für Behälter. Ähnlich der in der DE 38 21 331 C2 offenbarten Lüftungseinrichtung ist vorgesehen, dass bei einem Rücklauf von Öl in den Tank in dem Tank vorhandene Luft über einen Spalt in einem Umfangsbereich eines Filterelements aus dem Tank ausströmen und über ein Filterelement in die Umgebungsatmosphäre austreten kann.

Bei den zuvor beschriebenen Be- und Entlüftungsvorrichtungen für einen Tank besteht somit eine permanente durchgängige Verbindung zwischen dem Tankinneren und einer umgebenden Atmosphäre, so dass eine permanente Be- und Entlüftung gegeben ist. Trotz der eingesetzten Filterelemente ist die Be- und Entlüftung direkt an die Atmosphäre gekoppelt und es entweicht ständig ein Gemisch aus Luft und verdampftem Öl. Dies bewirkt, dass in einem Zeitraum von einem Jahr bis zu 15 % des Tankinhalts in die Atmosphäre entweichen. Insbesondere bei Heizöl als Brennfluid handelt es sich um einen leicht flüchtigen Kohlenwasserstoff, der die Umwelt enorm belastet und das Brennfluid, insbesondere knappes Erdöl, ungenutzt reduziert. Bei einem jährlichen Verbrauch von rund 23,824 Millionen Tonnen Heizöl in Deutschland für industrielle Lagerstätten als auch Lagerstätten in Häusern gehen somit ca. 3,572 Millionen Tonnen ungenutzt verloren, wobei hierauf bei einem Verbrauch im privaten Bereich von 20 Millionen Tonnen 3,0 Millionen Tonnen ungenutzter Verbrauch entfallen.

Aus der DE 23 58 806 A1 ist ferner ein Be- und Entlüftungsventil bekannt. Mit diesem Dokument wird vorgeschlagen, dass in einem Entlüftungsrohr eines innerhalb eines Gebäudes angeordneten Öltanks zwei Klappenventile angeordnet werden, um eine Be- und Entlüftung des Öltanks bei einem Befüllen bzw. Entleeren des Tanks zu ermöglichen. Nachteilig bei diesen Ventilen ist jedoch, dass es bei einer Fehlfunktion des jeweiligen Klappenventils zur Ausbildung eines zu starken Unter- bzw. Überdrucks innerhalb des Öltanks kommen kann, welcher zu einer Beschädigung des Tanks und damit zu einem unerwünschten Auslaufen des Öles führen kann.

Ferner offenbart die US 5,623,958 ein gattungsgemäßes Be- und Entlüftungsventil in Form eines Niederdruckfreigabeventils. Das Ventil weist eine Durchflusspassage auf, welche eine fluidale Verbindung zwischen dem Inneren und dem Äußeren eines Behälters ermöglicht, wobei im Inneren des Behälters ein leichter Unter- bzw. Überdruck herrscht. Dabei ist vorgesehen, dass Verschlusselemente zur Freigabe und zum Verschließen der Passage doppelt ausgeführt sind.

Des weiteren offenbart die DE 197 42 469 C2 ein multifunktionales Ventil für einen Fahrzeugtank. Es wird vorgeschlagen, dass bei einem Befüllen eines Fahrzeugtanks über einen Schwimmkörper sowohl eine Entlüftungsöffnung als auch eine Belüftungsöffnung verschlossen werden, um ein Austreten von Flüssigkeit aus dem Tank, auch in dem Fall, in dem sich das Fahrzeug, in das der Fahrzeugtank eingebaut ist, überschlägt, zu vermeiden. Nachteilig bei diesem Ventil ist jedoch, dass ab einem gewissen Füllstand das Ventil komplett die Be- und Entlüftungsöffnung verschließt, insbesondere durch das Ventil ein Austreten von Luft aus dem Tank beispielsweise durch eine größere Ausdehnung der Flüssigkeit aufgrund thermischer Ausdehnung, nicht möglich ist.

Schließlich offenbart die GB 2 209 583 A eine Ventilanordnung für ein Be- und Entlüftungsventil eines Abflussrohres einer Toilette.

Es ist daher Aufgabe der vorliegenden Erfindung, das gattungsgemäße Be- und Entlüftungsventil derartig weiterzuentwickeln, dass die Nachteile des Stands der Technik überwunden werden, insbesondere ein Be- und Entlüftungsventil bereitgestellt wird, welches einen ungenutzten Verlust eines Brennfluids reduziert und gleichzeitig eine Fehlfunktion verhindert, insbesondere eine fail-safe-Stellung zur Vermeidung von zu starken Über- bzw. Unterdrücken bereitgestellt. Ferner soll ein Brennfluidtank und ein Verfahren zum Be- und Entlüften eines Brennfluidtanks geliefert werden, die die Nachteile des Stands der Technik überwinden.

Die Aufgabe betreffend das Be- und Entlüftungsventil wird erfindungsgemäß durch die kennzeichnenden Merkmale des Patentanspruchs 1 gelöst.

Die Unteransprüche 2 bis 11 betreffen bevorzugte Ausführungsformen des Be- und Entlüftungsventils.

Die den Brennfluidtank betreffende Aufgabe wird durch die Merkmale des Patentanspruchs 12 gelöst.

Die das Verfahren betreffende Aufgabe wird gelöst durch ein Verfahren gemäß dem Patentanspruch 13, wobei die Patentansprüche 14 und 15 bevorzugte Ausführungsformen des Verfahrens betreffen.

Der Erfindung liegt somit die überraschende Erkenntnis zugrunde, dass durch eine Entkopplung einer Be- und Entlüftung eines Brennfluidtanks von einer umgebenen Atmosphäre durch ein Be- und Entlüftungsventil gemäß der Erfindung ein ungenutztes Entweichen von Brennfluid aus dem Tank vermieden werden kann und durch die Bereitstellung einer Bypassleitung eine fail-safe-Stellung des Ventils ermöglicht wird, durch die eine Überbeanspruchung des Brennfluidtanks vermieden wird. Dabei kann insbesondere vorgesehen sein, dass das Be- und Entlüftungsventil ein Filterelement, insbesondere ein Aktivkohlefilterelement, aufweist.

Durch die Anordnung des Be- und Entlüftungsventils an einer Entlüftungsöffnung des Brennfluidtanks werden insbesondere fünf Funktionen erfüllt:
1. Bei einem Befüllen des Brennfluidtanks mit dem Brennfluid, insbesondere Heizöl, kann Luft über das Be- und Entlüftungsventil aus dem Brennfluidtank entweichen, insbesondere nach Durchlaufen des Filters, insbesondere des multifunktionalen Filtermaterials wie des Aktivkohlefilters. Hierbei wird im Sinne der Erfindung unter einem multifunktionalen Filtermaterial ein Material verstanden, welches sowohl in Aerosol-Form vorliegende Kohlenwasserstoffverbindungen als auch in Gasform vorliegende Kohlenwasserstoffverbindungen herausfiltert. Die so aus dem Brennfluidtank austretende Luft kann über die Entlüftungsöffnung und den Ventilausgang des Be- und Entlüftungsventils in die Atmosphäre entweichen. Dadurch wird erreicht, dass kein Überdruck innerhalb des Brennfluidtanks aufgebaut werden kann. Nach Beendigung der Befüllung des Brennfluidtanks schließt das Be-und Entlüftungsventil, so dass kein Luftaustausch mehr mit der umgebenen Atmosphäre stattfindet. Das Be- und Entlüftungsventil befindet sich somit bei einem Befüllen des Brennfluidtanks in einer ersten Öffnungsposition, in der ein erstes Ventilglied geöffnet ist, während es nach dem Befüllen in eine Geschlossenposition wechselt.
2. Bei einer Entnahme eines Brennfluids aus dem Brennfluidtank, insbesondere bei einem Betrieb eines an dem Brennfluidtank angeschlossenen Brenners über den Ventilausgang kann dann Luft durch das Be- und Entlüftungsventil durch die Entlüftungsöffnung in den Brennfluidtank fließen. Dazu befindet sich das Be- und Entlüftungsventil in diesem Betriebszustand in einer zweiten Öffnungsposition, in der ein zweites Ventilglied geöffnet ist. Dies führt dazu, dass bei einer Entnahme von Brennfluid aus dem Brennfluidtank Luft über das Be- und Entlüftungsventil in den Brennfluidtank geführt wird, so dass kein Unterdruck in dem Brennfluidtank entsteht, der insbesondere eine Entnahmegeschwindigkeit des Brennfluids aus dem Brennfluidtank negativ beeinflussen könnte oder sogar zu einer Beschädigung und/oder Zerstörung des Brennfluidtanks führen könnte.
3. Wird der Brennfluidtank weder befüllt noch entleert, so befindet sich das Be- und Entlüftungsventil in einer Geschlossenposition, so dass keine Luft über die Entlüftungsöffnung entweichen kann und damit insbesondere vermieden wird, dass verdampftes Heizöl, welches sich mit der in dem Brennfluidtank befindlichen Luft vermischt, über die Entlüftungsöffnung entweichen kann.
4. In der bevorzugten Ausführungsform, in der ein multifunktionales Filtermaterial, wie ein Aktivkohlefilter, als Filterelement eingesetzt wird, wird durch das Filterelement eine Absorbierung von Kohlenwasserstoffen und somit einer Reduzierung der CO₂-Belastung einer Umgebungsatmosphäre erreicht.
5. Um die Betriebssicherheit des Brennfluidtanks zu erhöhen, ist zumindest eine Bypassleitung, vorzugsweise umfassend ein zusätzliches drittes und/oder viertes Ventilglied, vorgesehen. Die Bypassleitung ermöglicht es, dass die Ausbildung von zu hohen Über- bzw. Unterdrücken innerhalb des Brennfluidtanks bei einer

Fehlfunktion eines ersten bzw. zweiten Ventilgliedes vermieden wird. Bei Verwendung zusätzlicher dritter bzw. vierter Ventilglieder in der Bypassleitung gilt folgendes: Dieses dritte bzw. vierte Ventilglied bleibt bei den zuvor beschriebenen üblichen Betriebssituationen des Brennfluidtanks geschlossen, insbesondere wird bei einem Befüllen des Tanks das erste Ventilglied betätigt, während bei einem Entleeren das zweite Ventilglied betätigt wird. Kommt es bei einem Befüllen oder Entleeren des Brennfluidtanks zu einem Nichtöffnen des Ventils, das heißt bleibt das Ventil in der Geschlossenposition, so wird durch das dritte Ventilglied erreicht, dass bei einem bestimmten Unter- bzw. Überdruck innerhalb des Brennfluidtanks das dritte Ventilglied geöffnet wird, um eine ungehinderte Zirkulation der in dem Brennfluidtank vorhandenen Luft zu ermöglichen, so dass es zu keinem Schaden an dem Brennfluidtank durch einen zu starken Unter- oder Überdruck in diesem kommen kann. Es wird also eine Zweistufigkeit des Ventils derart erreicht, dass in üblichen Betriebssituationen in einer ersten Stufe das erste und/oder zweite Ventilglied öffnen und schließen und das zusätzliche dritte bzw. vierte Ventilglied nicht betätigt wird, jedoch bei Fehlfunktionen des ersten bzw. zweiten Ventilgliedes das zusätzliche dritte bzw. vierte Ventilglied als zweite Stufe die Bypassleitung öffnet.

Somit wird durch das erfindungsgemäße Be- und Entlüftungsventil das Einsparungspotential für ein Brennfluid, welches sich durch Verhinderung eines ungehinderten Entweichens eines Brennfluidgases aus einem Brennfluidtank ergibt, genutzt und gleichzeitig bei Verwendung eines entsprechenden Filterelementes eine Reduzierung der CO₂-Belastung einer umgebenen Atmosphäre erreicht. Durch die Ausbildung des Filterelements und/oder des dritten Ventilglieds als Austauschmodul, die ergänzend oder alternativ zu der zuvor beschriebenen Ausführung und Funktionsweise des Be- und Entlüftungsventils realisiert werden kann, also insbesondere einen unabhängigen Erfindungsaspekt darstellt, wird die Betriebssicherheit weiter erhöht. So kann durch die Ausbildung des jeweiligen Austauschmoduls mit der entsprechenden geometrischen Identifizierungsmarkierung sichergestellt werden, dass das vorhandene Austauschmodul nur durch ein geeignetes Austauschmodul ersetzt wird. So kann verhindert werden, dass durch den Einsatz eines ungeeigneten Filterelements oder Ventilglieds, die beispielsweise den Aufbau eines unzulässig hohen Über- bzw. Unterdrucks in dem Brennfluidtank bewirken, Schäden an dem Brennfluidtank entstehen.

Weitere Merkmale und Vorteile der Erfindung ergeben sich aus der nachfolgenden Beschreibung, in der bevorzugte Ausführungsformen der Erfindung an Hand von schematischen Zeichnungen erläutert sind. Dabei zeigt:
Figur 1 eine schematische Seitenansicht eines erfindungsgemäßem Be- und Entlüftungsventils;
Figur 2 eine Explosionsansicht einer ersten Ausführungsform eines erfindungsgemäßen Be-und Entlüftungsventils;
Figur 3 eine schematische Ansicht des Be- und Entlüftungsventils der Figur 2 in einer Geschlossenposition;
Figur 4 eine schematische Ansicht des Be- und Entlüftungsventils der Figuren 2 und 3 in einer ersten Öffnungsposition;
Figur 5 eine schematische Darstellung des Be- und Entlüftungsventils der Figuren 2 bis 4 in einer zweiten Öffnungsposition;
Figur 6 eine schematische Darstellung des Be- und Entlüftungsventils der Figuren 2 bis 5 in einer Betriebsposition, in der eine Bypassleitung geöffnet ist;
Figur 7 eine Teilansicht einer zweiten Ausführungsform eines erfindungsgemäßen Be- und Entlüftungsventils;
Figur 8 eine schematische Ansicht eines Filterelements eines Be- und Entlüftungsventils gemäß der in Figur 7 dargestellten Ausführungsform;
Figur 8a eine Detailansicht des Ausschnitts A der Figur 8;
Figur 9 eine Teilansicht einer Abwandlungsform des in der Figur 7 dargestellten Be- und Entlüftungsventils;
Figur 10 eine Detailansicht eines in dem Be- und Entlüftungsventil der Figur 7 einsetzbaren Filterelements;
Figur 11 a einen eine Verriegelungseinrichtung in einer ersten Betriebsposition zeigenden Ausschnitt der Umgehungsleitung des Be- und Entlüftungsventils der Figur 9 aus Richtung C;
Figur 11b eine Querschnittsansicht des Ausschnitts der Umgehungsleitung aus Richtung D in Figur 11a;
Figur 12a eine Aufsicht auf die Verriegelungseinrichtung gemäß der Figur 11a in einer zweiten Betriebsposition;
Figur 12b eine Teil-Querschnittsansicht aus Richtung E in Figur 12a;
Figur 13a eine Aufsicht auf die Verriegelungseinrichtung gemäß der Fig. 12a in einer dritten Betriebsposition;
Figur 13b eine Querschnittsansicht aus Richtung F in Figur 13a;
Figur 14 eine schematische Querschnittsansicht einer dritten Ausführungsform eines erfindungsgemäßen Be- und Entlüftungsventils;
Figur 15 eine schematische Querschnittsansicht einer vierten Ausführungsform eines erfindungsgemäßen Be- und Entlüftungsventils;
Figur 16a eine Detailansicht des Ausschnitts B der Figur 15, die das Be- und Entlüftungsventil in einer ersten Öffnungsposition zeigt;
Figur 16b eine Detailansicht des Ausschnitts B der Figur 15, die das Be- und Entlüftungsventil in einer zweiten Öffnungsposition zeigt;
Figur 17 eine schematische Aufsicht auf eine fünfte Ausführungsform eines erfindungsgemäßen Be-und Entlüftungsventils;
Figur 18 eine schematische Aufsicht auf einen Einsatz des Be- und Entlüftungsventils der Figur 17;
Figur 19 eine Explosionsansicht des Einsatzes der Figur 18;
Figur 20a eine Teil-Querschnittsansicht des Be- und Entlüftungsventils der Figur 17 in einer ersten Betriebsposition,
Figur 20b eine Querschnittsansicht eines Indikators in der ersten Betriebsposition;
Figur 21 a eine Teil-Querschnittsansicht des Be- und Entlüftungsventils der Figur 17 in einer zweiten Betriebsposition;
Figur 21b eine Querschnittsansicht des Indikators in der zweiten Betriebsposition;
Figur 22a eine Teil-Querschnittsansicht des Be- und Entlüftungsventils der Figur 17 in einer dritten Betriebsposition; und
Figur 22b eine Querschnittsansicht des Indikators in der dritten Betriebsposition.

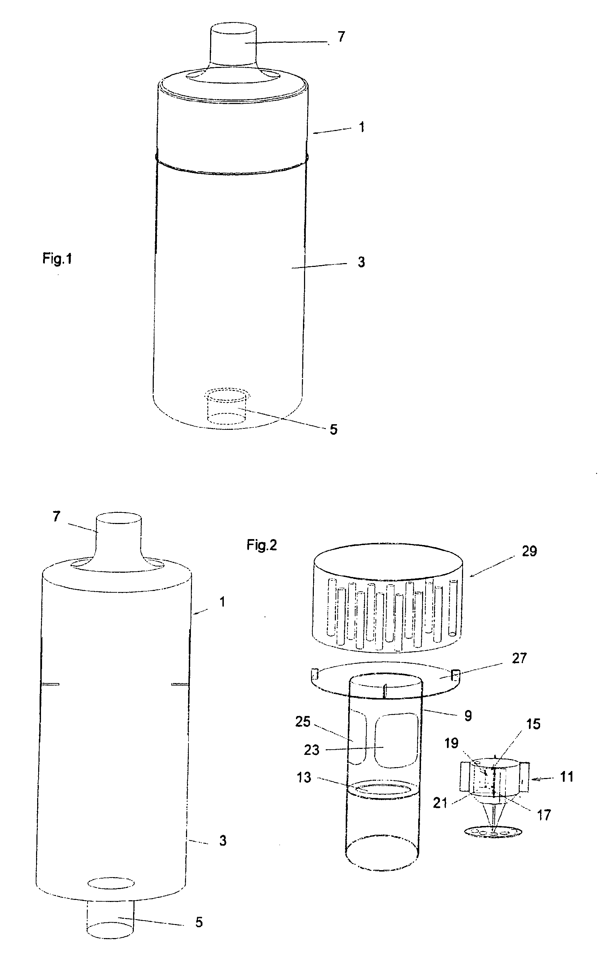

Figur 1 zeigt eine schematische Seitenansicht einer ersten Ausführungsform eines erfindungsgemäßen Be- und Entlüftungsventils 1. Das Be- und Entlüftungsventil 1 umfasst ein Gehäuse 3, an dem ein Ventileingang 5 und ein Ventilausgang 7 ausgebildet sind. Das Be- und Entlüftungsventil 1 wird erfindungsgemäß mit einem nicht dargestelltem Brennfluidtank, insbesondere Heizöltank, derartig verbunden, dass der Ventileingang 5 mit einer Entlüftungsöffnung des Brennfluidtanks verbunden wird.

In Figur 2 ist eine Explosionsansicht des Be- und Entlüftungsventils 1 der Figur 1 dargestellt. Wie später erläutert werden wird, umfasst das Be- und Entlüftungsventil 1 neben dem Gehäuse 3 ein während des Betriebs des Be- und Entlüftungsventils innerhalb des Gehäuses 3 angeordnetes Hüllrohr 9. Innerhalb des Hüllrohrs 9 wird ein erstes Ventilglied bereitgestellt, welches teilweise durch einen ersten Ventilschließkörper in Form eines Ventilkegels 11 gebildet ist. Wie später erläutert werden wird, dient der Ventilkegel 11 dazu, eine erste Durchgangsöffnung 13 in dem Hüllrohr 9 in einer Geschlossenposition des Be- und Entlüftungsventils 1 zu verschließen.

Innerhalb des Ventilkegels 11 ist ein zweites Ventilglied 15 ausgebildet. Das Ventilglied 15 umfasst einen zweiten Ventilschließkörper in Form eines Kugelventils 17. Mittels des Kugelventils 17 wird in der Geschlossenposition des Be- und Entlüftungsventils 1 eine zweite Durchgangsöffnung 19 einer ersten Durchgangsleitung 21 geschlossen. Das Hüllrohr 9 umfasst ferner ein drittes Ventilglied in Form eines ersten Berstfensters 23 sowie ein viertes Ventilglied in Form eines zweiten Berstfensters 25, dessen Funktion später erläutert wird. Den oberen Abschluss des Hüllrohrs 9 bildet ein Aufsatz 27, auf dem ein in Figur 2 mit dem Bezugszeichen 29 bezeichnetes Filterelement in Form eines ein multifunktionales Filtermaterial umfassenden Filters, wie einem Aktivkohlefilter, angeordnet wird.

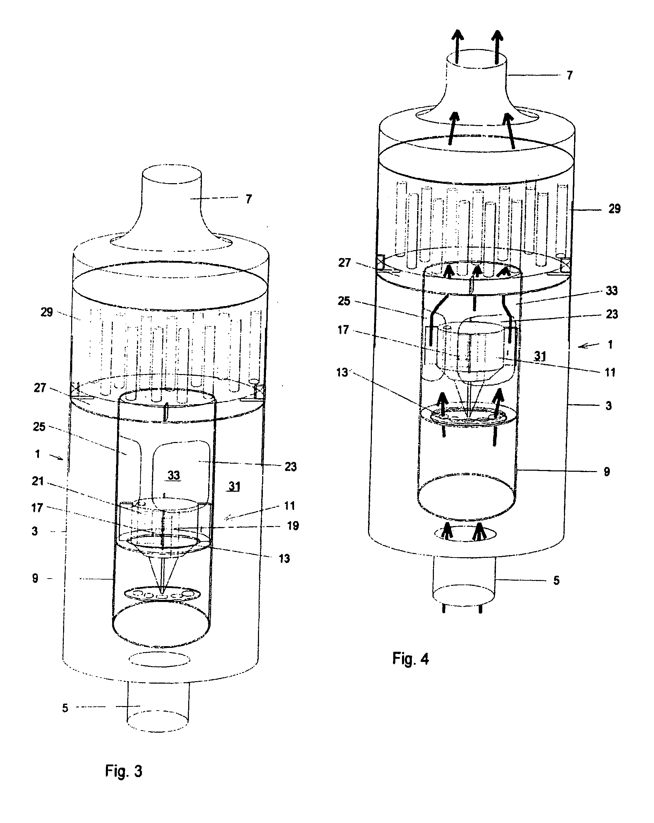

In Figur 3 ist das Be- und Entlüftungsventil der Figuren 1 und 2 im zusammengebauten Zustand dargestellt. Dabei befindet sich das Be- und Entlüftungsventil 1 in Figur 3 in einer Geschlossenposition. In dieser Geschlossenposition wird die Durchgangsöffnung 13 mittels des Ventilkegels 11 verschlossen, während die Durchgangsöffnung 19 mittels des Kugelventils 17 verschlossen ist. Darüber hinaus ist durch die Berstfenster 23, 25 eine Verbindung eines ersten Innerraums 31 innerhalb des Gehäuses 3 mit einem zweiten Innenraum 33 des Hüllrohrs 9 verschlossen. Der in Figur 3 obere Bereich des Innenraums 31 ist durch den Aufsatz 27 verschlossen. Somit ist eine Verbindung zwischen dem Ventileingang 5 und dem Ventilausgang 7 in der in Figur 3 dargestellten Betriebsposition des Be- und Entlüftungsventils 1 geschlossen.

Das Be- und Entlüftungsventil 1 befindet sich insbesondere in dieser Betriebsposition, wenn der Brennfluidtank weder befüllt wird, noch Brennfluid aus dem Tank entnommen wird. In dieser Betriebssituation herrscht im wesentlichen weder ein Unter- noch ein Überdruck innerhalb des Brennfluidtanks im Vergleich zu einer umgebenden Atmosphäre bzw. einer an dem Ventilausgang 7 anliegenden Atmosphäre, so dass sowohl das erste Ventilglied als auch das zweite Ventilglied geschlossen sind. Der Brennfluidtank ist somit von der umgebenden Atmosphäre abgekoppelt und es können keine verdunstenden Brennfluidgase aus dem Tank entweichen.

In Figur 4 ist die Betriebssituation des Be- und Entlüftungsventils 1 in einer ersten Öffnungsposition dargestellt. In dieser ersten Öffnungsposition wird eine erste Verbindungsleitung zwischen dem Ventileingang 5 und dem Ventilausgang 7 dadurch geöffnet, dass mittels des Ventilkegels 11 die Durchgangsöffnung 13 geöffnet wird. Diese Öffnung der ersten Verbindungsleitung stellt eine erste Betriebsposition einer ersten Betriebsstufe des Be- und Entlüftungsventils 1 dar.

In Figur 4 ist durch die Pfeile der Strömungsweg von Luft, die durch den Ventileingang 5 in das Be-und Entlüftungsventil 1 eintritt und durch den Ventilausgang 7 austritt, dargestellt. Diese erste Öffnungsposition wird von dem Be- und Entlüftungsventil 1 insbesondere dann eingenommen, wenn neues Brennfluid in den Brennfluidtank eingefüllt wird. Dieses Einfüllen bewirkt, dass ein in dem Brennfluidtank wirkender Druck derartig ansteigt, dass dieser um eine erste Druckdifferenz größer als der Umgebungsdruck wird. Dieser erhöhte Druck wirkt besonders an dem Ventilkegel 11, so dass der Ventilkegel 11 entgegen der Gravitationskraft nach oben ausgelenkt wird und so die Durchgangsöffnung 13 freigibt. Dies ermöglicht es der Luft vom Ventileingang 5 durch den Innenraum 33 und das Filterelement 29 zum Ventilausgang 7 zu strömen. Insbesondere werden in dem Filterelement 29 Kohlenwasserstoffverbindungen in der aus dem Brennfluidtank austretenden Luft absorbiert.

Wird das Einfüllen des Brennfluids in den Brennfluidtank beendet, so bewirkt die durch die Gravitation auf den Ventilkegel 11 ausgeübte Rückstellkraft, dass der Ventilkegel 11 in die in Figur 3 dargestellte Position zurückgeht und so das Be- und Entlüftungsventil 1 die Geschlossenposition einnimmt.

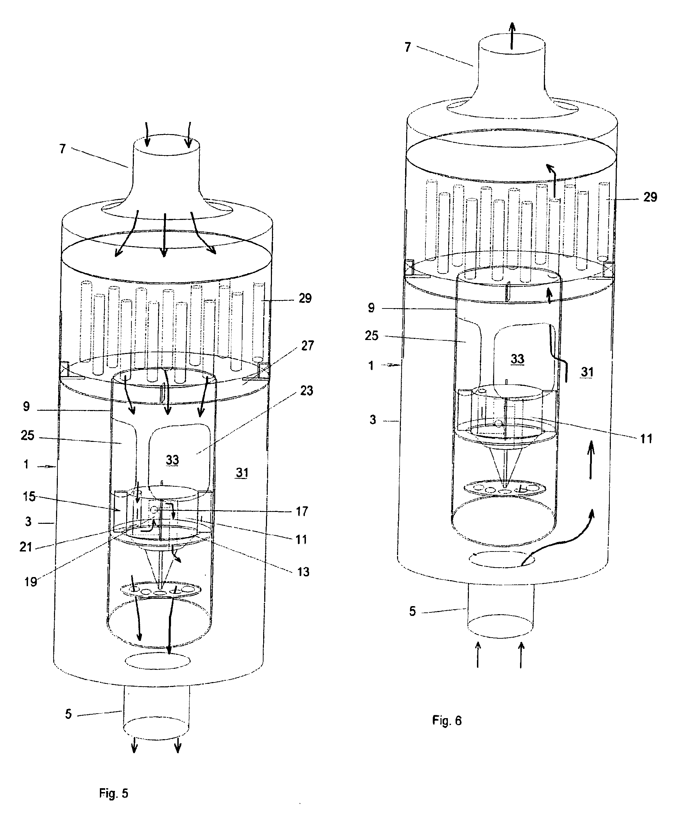

Wird daraufhin Brennfluid aus dem Brennfluidtank entnommen, beispielsweise indem ein mit dem Brennfluidtank in Verbindung stehender Brenner eingeschaltet wird, so entsteht innerhalb des Brennfluidtanks ein Unterdruck. Wie in Figur 5 dargestellt, weist der Ventilkegel 11 die Durchgangsleitung 21 auf, in der das Kugelventil 17 angeordnet ist. Aufgrund der Gravitationswirkung ist das Kugelventil 17, wenn ein Druckgleichgewicht zwischen dem Ventileingang 5 und dem Ventilausgang 7 herrscht, in einer Geschlossenposition. Sinkt jedoch der Druck innerhalb des Brennfluidtanks, und damit der Druck an dem Ventileingang 5 derartig, dass eine zweite Druckdifferenz zwischen dem Ventileingang 5 und dem Ventilausgang 7, also der das Be- und Entlüftungsventil 1 umgebenden Atmosphäre, vorliegt, so bewirkt diese Druckkraft, dass die durch die Gravitation an dem Kugelventil 17 aufgebaute Rückstellkraft überwunden wird und das Kugelventil 17 in der in Figur 5 dargestellten Weise geöffnet wird.

Diese Auslenkung des Kugelventils 17 bewirkt, dass die Durchgangsöffnung 19 und damit die Durchgangsleitung 21 geöffnet wird und so Luft vom Ventilausgang 7 durch das Filterelement 29 und den Innerraum 33 sowie die Durchgangsleitung zum Ventileingang 5 strömen kann. Auf die Weise wird eine zweite Verbindungsleitung zwischen dem Ventilausgang 7 und dem Ventileingang 5 bereitgestellt, die es ermöglicht, den in dem Brennfluidtank entstehenden Unterdruck auszugleichen. Diese Öffnung der zweiten Verbindungsleitung stellt eine zweite Betriebsposition der ersten Betriebsstufe des Be- und Entlüftungsventils dar.

Wird die Entnahme des Brennfluids aus dem Brennfluidtank unterbunden, bewirkt die durch die Gravitationskraft aufgebaute Rückstellkraft, dass das Ventil 17 wieder in die Geschlossenposition übergeht und somit die Durchgangsöffnung 19 und damit die Durchgangsleitung 21 verschlossen wird, so dass sich das Be- und Entlüftungsventil wieder in der in Figur 3 dargestellten Betriebsposition befindet.

In Figur 6 ist das Be- und Entlüftungsventil 1 in einer Sicherheitsbetriebssituation bzw. fail-safe-Stellung dargestellt. Zuvor ist es insbesondere zu einer Fehlfunktion des ersten Ventilglieds, insbesondere einer Blockade des Ventilkegels 11, gekommen. Um zu vermeiden, dass es aufgrund der Fehlfunktion des ersten Ventilgliedes zu einer Schädigung des Tanks, beispielsweise durch einen während einer Befüllung des Brennfluidtanks entstehenden Überdruck, kommt, sind das dritte und vierte Ventilglied in Form der Berstfenster 23, 25 vorgesehen.

Steigt der Druck innerhalb des Brennfluidtanks auf einen derartigen Wert, dass die Druckdifferenz zwischen dem Druck innerhalb des Brennfluidtanks und dem Druck innerhalb der umgebenden Atmosphäre und damit die Druckdifferenz zwischen dem Ventileingang 5 und dem Ventilausgang 7 oberhalb des ersten Druckdifferenzwertes liegt und insbesondere größer als eine dritte Druckdifferenz ist, so kommt es bei dem entsprechenden Überdruck innerhalb des Brennfluidtanks zu einem Bersten des Berstfensters 23, so dass die Luft über eine Bypassleitung durch den Ventileingang 5, den Innenraum 31 und den Innenraum 33 durch das Filterelement 29 zum Ventilausgang 7 strömen kann.

Kommt es hingegen bei einem Entleeren des Brennfluidtanks zu einer Fehlfunktion des zweiten Ventilglieds, insbesondere des Kugelventils 17, so sieht das vierte Ventilglied in Form des Berstfensters 25 vor, dass die Bypassleitung ebenfalls geöffnet wird, wenn eine Druckdifferenz zwischen dem Ventilausgang 7 und dem Ventileingang 5 einen vierten Druckdifferenzwert übersteigt. Durch ein Bersten des Berstfensters 25 und damit ein Öffnen des vierten Ventilglieds wird die Verbindung zwischen dem Ventilausgang 7, dem Filterelement 29, dem Innenraum 33, dem Innenraum 31 und dem Ventileingang 5, unter Umgehung des ersten und zweiten Ventilgliedes, geöffnet, so dass ein Druckausgleich zwischen dem Brennfluidtankinnenraum und der umgebenden Atmosphäre erreicht wird. Durch die Öffnung des dritten bzw. vierten Ventilglieds in Form der Berstfenster 23, 25 wird das Be- und Entlüftungsventil 1 in eine zweite Betriebsstufe überführt. Insgesamt arbeitet das Be- und Entlüftungsventil 1 also zweistufig. In einer ersten Stufe findet eine reversible Öffnung einer Verbindung zwischen dem Ventileingang 5 und dem Ventilausgang 7 statt. Wird das Be- und Entlüftungsventil 1 jedoch in eine zweite Betriebsstufe überführt, beispielsweise bei einer Fehlfunktion des ersten und/oder des zweiten Ventilglieds, findet über das dritte bzw. vierte Ventilglied eine, insbesondere irreversible, Öffnung dieser Verbindung zwischen dem Ventileingang 5 und dem Ventilausgang 7 statt.

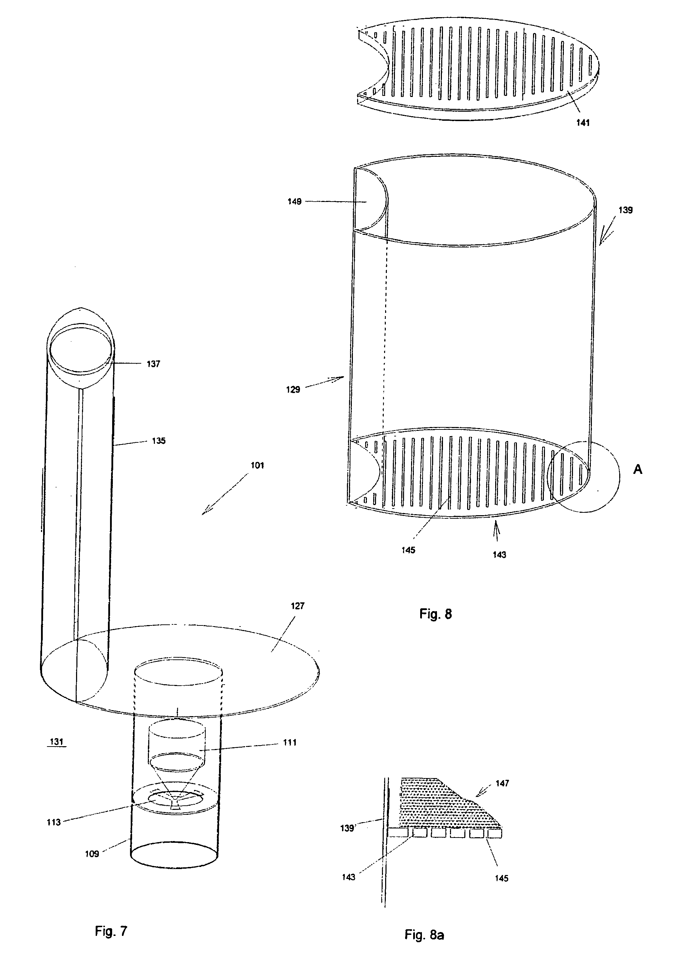

Bei der in den Figuren 1 bis 6 dargestellten Ausführungsform des erfindungsgemäßen Be- und Entlüftungsventils 1 ist die Bypassleitung derartig ausgebildet, dass auch bei Benutzung der Bypassleitung die Luft durch das Filterelement 29 hindurchtritt. In Figur 7 ist hingegen eine zweite Ausführungsform eines erfindungsgemäßen Be- und Entlüftungsventils dargestellt, bei welcher die Bypassleitung ferner das Filterelement des Be- und Entlüftungsventils umgeht. In Figur 7 ist eine schematische Ansicht eines Teils eines Be- und Entlüftungsventils 101 dargestellt. Die Elemente des Be- und Entlüftungsventils 101, die funktional denjenigen des Be- und Entlüftungsventils 1 entsprechen, tragen die gleichen Bezugszeichen, allerdings um 100 erhöht. Im Gegensatz zu dem Be-und Entlüftungsventil 1 weist das Be- und Entlüftungsventil 101 ein Hüllrohr 109 auf, in welchem keine Berstfenster ausgebildet sind. Ansonsten entspricht der Aufbau des Hüllrohrs 109 sowie des Ventilglieds, das den Ventilkegel 111 umfasst, im wesentlichen demjenigen des Ventilkegels 11 des Be- und Entlüftungsventils 1 der Figur 1.

Gemäß dieser Ausführungsform der Erfindung ist an dem Aufsatz 127 eine Umgehungsleitung 135 5 ausgebildet. Die Umgehungsleitung 135 stellt eine Verbindung zwischen dem Innenraum 131 unter Umgehung eines in Figur 7 nicht dargestellten, jedoch in Figur 8 dargestellten Filterelementes 129 bereit. Bei dem Be- und Entlüftungsventil 101 sind das dritte und vierte Ventilglied durch eine gemeinsame Berstscheibe in Form eines Berstfensters 137 ausgebildet. Kommt es zu einer Fehlfunktion des ersten und/oder zweiten Ventilglieds, entsteht innerhalb des Brennfluidtanks ein Unter- bzw. Überdruck, der aufgrund der direkten Verbindung mit dem nicht dargestellten Ventileingang durch den Innenraum 131 hindurch auch im Inneren der Umgehungsleitung 135 herrscht. Kommt es zu einem entsprechenden Über- oder Unterdruck innerhalb des Brennfluidtanks, so bewirkt die an dem Berstfenster 137 wirkende Druckdifferenz, dass das Berstfenster 137 bei einer entsprechenden Druckdifferenz bricht und so eine direkte Verbindung zwischen dem Ventileingang und dem Ventilausgang des Be- und Entlüftungsventils 101 bereitgestellt wird.

In Figur 8 ist ein Filterelement 129 des Be- und Entlüftungsventils 101 der Figur 7 dargestellt. Wie Figur 8 zu entnehmen ist, ist das Filterelement 129 als Austauschmodul in Form eines Filtergehäuses 139, welches über einen Filterdeckel 141 verschlossen werden kann, ausgebildet. In dem Filtergehäuse 139 wird insbesondere ein schüttfähiges multifunktionales Filtergranulat, wie ein Aktivkohlefiltergranulat, angeordnet. Hierzu weist das Filtergehäuse 139, wie in Figur 8a, die einen Ausschnitt A der Figur 8 in Detailansicht zeigt, dargestellt, einen Boden 143, in dem Schlitze 145 ausgebildet sind, auf. In Figur 8a ist ferner dargestellt, dass ein in Figur 8 nicht dargestelltes Aktivkohlefiltergranulat 147 angeordnet ist. Die Körnung des Granulats 147 ist so an die Dimension der Schlitze 145 angepasst, dass zwar Luft durch die Schlitze 145 fließen kann, das Granulat 147 jedoch im Inneren des Gehäuses 139 gehalten wird.

Um zu verhindern, dass ein ungeeignetes Filterelement in das Be- und Entlüftungsventil 101 eingesetzt wird, weist das Filterelement 129 eine geometrische Identifizierungsmarkierung auf. Die Identifizierungsmarkierung besteht darin, dass die Umfangsform des Filtergehäuses 139 von der elliptischen Form durch eine Einbuchtung 149 abweicht. Aufgrund der Bereitstellung der Umgehungsleitung 135 weist das Gehäuse 103 des Be- und Entlüftungsventils 101 eine dazu komplementäre Oberflächenform auf. Dadurch wird verhindert, dass ein Benutzer ein für das Be- und Entlüftungsventil 101 ungeeignetes Filterelement, welches eine davon abweichende Identifizierungsmarkierung aufweist, einsetzen kann. So können beispielsweise verschiedene Filterelemente für verschiedene Brennfluidtanks, insbesondere in Abhängigkeit von ihrem Filtervolumen, einem maximalen Filterdurchsatz oder einer maximal erlaubten Druckdifferenz an einem Eingang und einem Ausgang des Filterelements 129 oder der Art des in dem Brennfluidtank vorhandenen Brennfluids bereitgestellt werden. So kann die Porosität oder die Durchlässigkeit der unterschiedlichen Filterelemente voneinander abweichen. Würde ein falsches Filterelement in dem Be- und Entlüftungsventil 101 verwendet werden, so könnte es zu einer Fehlfunktion desselben kommen, insbesondere keine ausreichende Durchflussgeschwindigkeit der Luft zwischen dem Ventileingang und dem Ventilausgang ermöglicht werden, was dazu führen könnte, dass es innerhalb des Brennfluidtanks zu nicht gewünschten Über- bzw. Unterdrücken kommen könnte, die das Filterelement aufgrund zu hoher Durchflussraten oder Druckdifferenzen zerstört. Hierbei ist bevorzugt, das das Be- und Entlüftungsventil 101 und/oder das Filterelement 129 mechanisch so ausgestaltet ist bzw. sind, dass das Filterelement 129 nur dann ausgetauscht werden kann, wenn das dritte bzw. vierte Ventilglied sich in einer geschlossenen Position befindet, insbesondere das Berstfenster 137 intakt ist. Die Ausbildung der Identifizierungsmarkierung kann alternativ oder ergänzend, also auch unabhängig von den zuvor beschriebenen Aspekten des Be- und Entlüftungsventils realisiert sein.

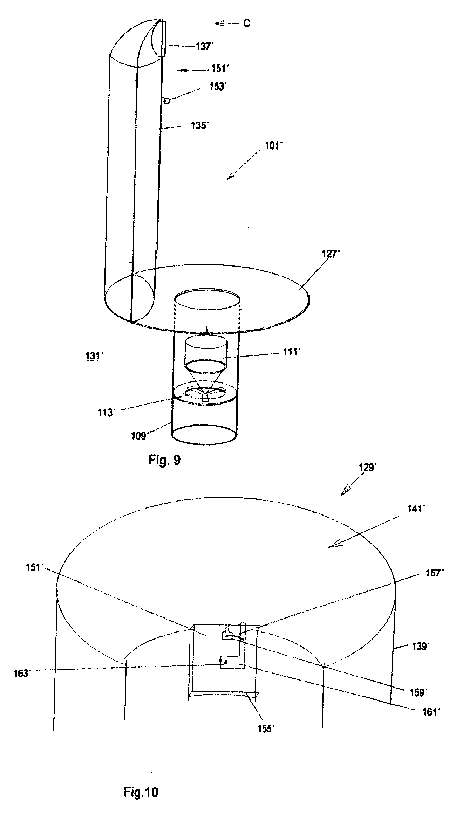

Ein Beispiel für eine mechanische Ausgestaltung des Be- und Entlüftungsventils 101 bzw. des Filterelements 129 ist in den Figuren 9 bis 13b dargestellt. Diese Figuren zeigen eine abgewandelte Ausführungsform des Be- und Entlüftungsventils 101 1 in Form eines Be- und Entlüftungsventils 101'. Diejenigen Elemente des Be- und Entlüftungsventils 101', die denjenigen des Be- und Entlüftungsventils 101 entsprechen, tragen die gleichen Bezugszeichen, allerdings einfach gestrichen.

Figur 9 stellt eine Aufsicht auf das Be- und Entlüftungsventil 101' in Anlehnung an die Figur 7 dar. Wie jedoch Figur 9 zu entnehmen ist, ist das Berstfenster 137' in dem Be- und Entlüftungsventil 101' so angeordnet, dass eine Hauptebene des Berstfensters 137' parallel zu einer Längsrichtung der Umgehungsleitung 135' verläuft. Im Gegensatz hierzu ist bei dem Be- und Entlüftungsventil 101 diese Ebene des Berstfensters 137 senkrecht zu einer Längsrichtung der Umgehungsleitung 135 angeordnet.

Weiterhin umfasst das Be- und Entlüftungsventil 101' eine Verriegelungseinrichtung 151', von der in Figur 9 ein mit der Umgehungsleitung 135' verbundener Sicherungsbolzen 153' dargestellt ist.

In Figur 10 ist eine Auschnittsansicht eines Filterelementes 129', welches in dem Be- und Entlüftungsventil 101' angeordnet werden kann, dargestellt. Im Gegensatz zu dem Filterelement 129 ist bei dem Filterelement 129' ein Filterdeckel 141', der Durchlassöffnungen aufweist, fest mit dem Filtergehäuse 139' verbunden, insbesondere einstückig mit diesem ausgebildet. Die Verriegelungseinrichtung 151' umfasst ferner einen Verriegelungsmechanismus 155', der, wie nachfolgend erläutert werden wird, mit dem Sicherungsbolzen 153' wechselwirkt. Der insbesondere in einer Vertiefung des Filtergehäuses 139' angeordnete Verriegelungsmechanismus 155' umfasst ein Federelement in Form einer Blattfeder 157', einen bewegbar gelagerten Sicherungsstift 159' sowie eine bewegbar gelagerte Sicherungsplatte 161', in der eine Aussparung 163', die, wie nachfolgend erläutert werden wird, insbesondere mit dem Sicherungsbolzen 153' wechselwirkt, ausgebildet ist.

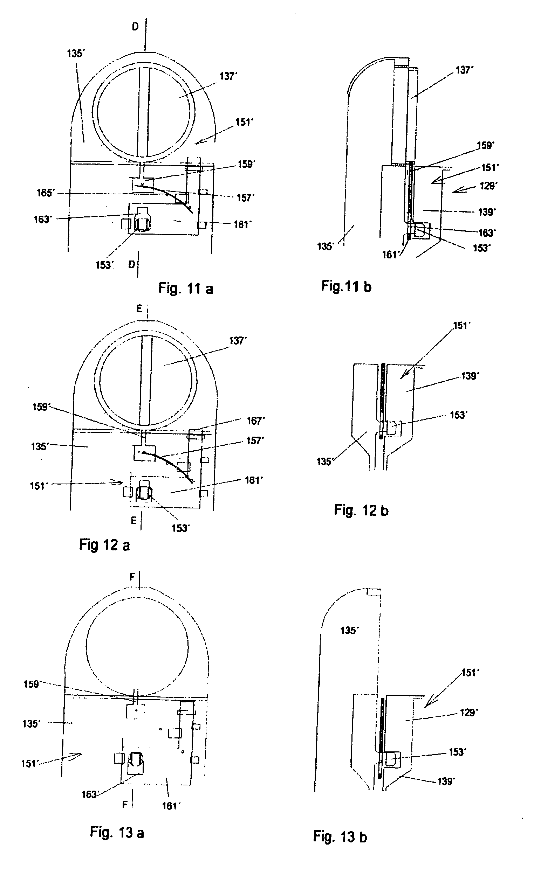

Die Funktionsweise der Verriegelungseinrichtung 151' wird nun anhand der Figuren 11a bis 13b erläutert. In den Figuren 11a und 11b ist die Verriegelungseinrichtung 151' in einer ersten Betriebsposition, in den Figuren 12a und 12b in einer zweiten Betriebsposition und in den Figuren 13a und 13b in einer dritten Betriebsposition dargestellt.

In den Figuren 11a und 11b ist die erste Betriebsposition der Verriegelungseinrichtung 151', die einer normalen Betriebsposition des Be- und Entlüftungsventils 101' entspricht, dargestellt. Eine Öffnung in der Umgehungsleitung 135' ist durch das Berstfenster 137' verschlossen. Darüber hinaus ist das Filterelement 129' in das Be- und Entlüftungsventil 101' eingesetzt. Wie insbesondere Figur 11a zu entnehmen ist, wird die Blattfeder 157' an einem Auflagepunkt 165' abgestützt. In dieser Betriebsposition ist die Blattfeder 157' insbesondere derartig vorgespannt, dass sowohl der Sicherungsstift 159' als auch die Sicherungsplatte 161' in eine Richtung in Figur 11a nach oben gezwungen werden. Dies bewirkt, dass der Sicherungsbolzen 153' derartig Eingriff in die Aussparung 163' der Sicherungsplatte 161' findet, dass eine Bewegung des Filterelementes 129' in Figur 11b nach rechts verhindert wird, also das Filterelement 129' mit der Umgehungsleitung 135' über den Sicherungsbolzen 153' verriegelt ist.

Um einen Austausch des Filterelementes 129' vornehmen zu können, wird das Be- und Entlüftungsventil 101' bzw. die Verriegelungseinrichtung 151' in die in den Figuren 12a und 12b dargestellte Betriebsposition überführt. Zu diesem Zweck wird die Sicherungsplatte 161' gegen die durch die Blattfeder 157' aufgebaute Federkraft in der Figur 11 a derartig nach unten bewegt, dass sie die in Figur 12a dargestellte Position einnimmt, beispielsweise indem ein Druck auf einen von der Sicherungsplatte 161' umfassten Befestigungsstift 167' aufgebaut wird. Diese Bewegung der Sicherungsplatte 161', also das Herunterdrücken der Sicherungsplatte 161', bewirkt, dass der Eingriff zwischen dem Sicherungsbolzen 153' und der Aussparung 163' gelöst wird, also ein Ausklinken des Sicherungsbolzens 153' aus der Sicherungsplatte 161' erreicht wird, so dass die Bauteile in Form der Umgehungsleitung 135' und des Filterelementes 129' voneinander getrennt werden können. Bei der Trennung der Umgehungsleitung 135' von dem Filterelement 129' wird ferner über eine nicht dargestellte Einrichtung bewirkt, dass der Sicherungsstift 159' ebenfalls in eine Richtung in den Figuren 11a bzw. 12a nach unten bewegt und in einer entsprechenden Position gehalten wird.

In den Figuren 13a und 13b ist das Be- und Entlüftungsventil 101', insbesondere die Verriegelungseinrichtung 151' in einer dritten Betriebsposition dargestellt. In dieser Betriebsposition wurde die zweite Stufe des Be- und Entlüftungsventils 101' ausgelöst, d. h. das dritte bzw. vierte Ventilglied dadurch geöffnet, dass das Berstfenster 137' aus der Öffnung in der Umgehungsleitung 135' herausgedrückt wurde bzw. das Berstfenster 137' dadurch gebrochen ist, dass ein Über- bzw. Unterdruck in der Umgehungsleitung 135' entstanden ist, der größer als der dritte bzw. vierte Differenzdruck war.

Wie insbesondere der Figuren 11 a und 12a zu entnehmen ist, stützt sich der Sicherungsstift 159' an dem Berstfenster 137' ab und wird durch die Blattfeder 157' in eine Richtung in den Figuren 11a und 12a nach unten gezwungen. Kommt es nun zu einem Bersten bzw. einer Entfernung des Berstfensters 137' wird der Sicherungsstift 159' durch die über die Blattfeder 157' aufgebaute Kraft in den Figuren 11a und 12a nach oben gedrückt, wodurch die Blattfeder 157' entspannt wird. Dadurch verliert diese ihren Halt an dem Auflagepunkt 165'. Die Blattfeder 157' fällt somit aus der Halterung, wodurch auch keine Kraft mehr auf die Sicherungsplatte 161' ausgeübt wird, so dass diese in eine Richtung in den Figuren 11a und 12a und 13a nach unten verrutscht. Dadurch findet der Sicherungsbolzen 153' wieder derartig Eingriff in die Aussparung 163' der Sicherungsplatte 161', dass eine Trennung des Filterelements 129' bzw. des Filtergehäuses 139' von der Umgehungsleitung 135' verhindert wird.

Dadurch wird erreicht, dass bei einem Bersten des Berstfensters 137' das Filterelement 129' und die Umgehungsleitung 135' miteinander verriegelt werden, und sichergestellt, dass bei einem Austausch des Filterelements 129' auch das Berstfenster 137' erneuert wird, um die Betriebssicherheit zu erhöhen.

Darüber hinaus kann ein Filterelement, vorzugsweise multifunktionales Filterelement und/oder Aktivkohlefilterelement, insbesondere in Form der Filterelemente 29, 129 auch unabhängig von einem Be- und Entlüftungsventil mit einer Entlüftungsöffnung eines Brennfluidtanks verbunden werden.

Die anhand der Be- und Entlüftungsventile 1, 101 und 101' beschriebenen Ausführungsformen der Erfindung sehen vor, dass als Rückstellkraft für das erste und zweite Ventilglied eine Gravitationskraft eingesetzt wird, so dass das Be- und Entlüftungsventil 1, 101, 101' eine vorgegebene Betriebsposition aufweist. Um auch eine davon abweichende Einbaulage des Be- und Entlüftungsventils 1, 101, 101' insbesondere eine zumindest teilweise horizontale Einbaulage, zu ermöglichen, kann aber auch in einer erfindungsgemäßen Ausführungsform vorgesehen sein, dass eine entsprechende Rückstellkraft über ein zusätzliches Rückstellelement, wie ein entsprechendes Federelement aufgebaut wird.

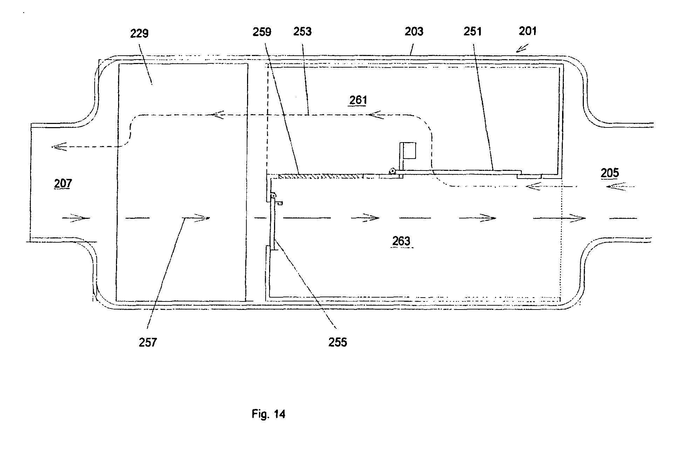

Darüber hinaus ist in Figur 14 eine dritte Ausführungsform eines Be- und Entlüftungsventils 201 dargestellt. Diejenigen Bauteile des Be- und Entlüftungsventils 201, die denjenigen des Be- und Entlüftungsventils 1 funktional entsprechen, tragen die gleichen Bezugszeichen, allerdings um 200 erhöht. Das Be- und Entlüftungsventil 201 weist eine vorgeschobenen horizontale Einbaulage auf. Bei dem Be- und Entlüftungsventil 201 sind das erste und das zweite Ventilglied unabhängig voneinander ausgebildet. Sowohl das erste Ventilglied als auch das zweite Ventilglied sind als Klappenventile ausgebildet. Kommt es zu einer Ausbildung eines Überdrucks am Ventileingang 205 im Vergleich zum Ventilausgang 207, so kommt es zu einem Verschwenken einer Ventilklappe 251 des ersten Ventilgliedes und so zu einer Verbindung zwischen dem Ventileingang 205 und dem Ventilausgang 207 durch Bereitstellung einer ersten Verbindungsleitung 253 zwischen dem Ventileingang 205 und dem Ventilausgang 207. Das Be- und Entlüftungsventil 201 geht also von einer in Figur 14 dargestellten Geschlossenposition in eine erste Öffnungsposition über.

Kommt es hingegen zu einem Unterdruck in dem Brennfluidtank, so kommt es aufgrund der unterschiedlichen Drücke im Bereich einer Ventilklappe 255 des zweiten Ventilgliedes dazu, dass es zu einer Verschwenkung der Ventilklappe 255 und somit zu einem Öffnen einer zweiten Verbindungsleitung 257 zwischen dem Ventilausgang 207 und dem Ventileingang 205 kommt. Das Be- und Entlüftungsventil 201 befindet sich dann in einer zweiten Öffnungsposition. Ein drittes bzw. viertes Ventilglied des Be- und Entlüftungsventils 201 ist durch ein Berstfenster 259 bereitgestellt. Bei einem Zerstören des Berstfensters 259 wird eine Verbindung zwischen einem Innenraum 261 und einem Innenraum 263 unter Umgehung sowohl der ersten Ventilklappe 251 als auch der zweiten Ventilklappe 255 geöffnet, so dass eine direkte Verbindung zwischen dem Ventileingang 205 und dem Ventilausgang 207 vorhanden ist.

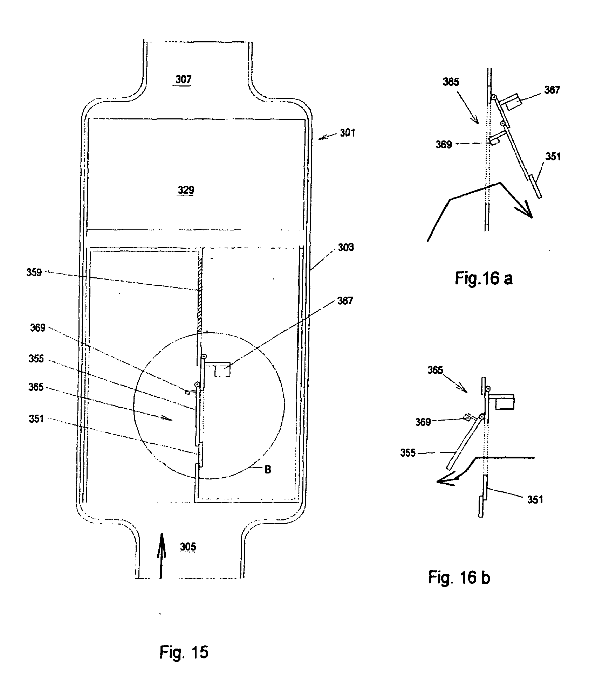

In Figur 15 ist eine vierte Ausführungsform eines erfindungsgemäßen Be- und Entlüftungsventils 301 dargestellt. Elemente, die funktional denjenigen des Be- und Entlüftungsventils 1 entsprechen, tragen die gleichen Bezugszeichen, allerdings um 300 erhöht. Ähnlich dem Be- und Entlüftungsventil 1 weist das Be- und Entlüftungsventil 301 eine vorgeschriebene vertikale Einbaulage auf. Ebenfalls sind die ersten und zweiten Ventilglieder des Be- und Entlüftungsventils 301 durch Klappenventile eines Klappen- bzw. Doppelklappensystems 365 gebildet und das Be- und Entlüftungsventil 301 weist ähnlich dem Be- und Entlüftungsventil 201 ein Berstfenster 359, das funktional dem Berstfenster 259 entspricht, auf. In den Figuren 16a und 16b sind Detailansichten des .Ausschnitts B der Figur 15 dargestellt.

In Figur 16a ist eine Position des Klappensystems 365 dargestellt, die einem ersten Öffnungszustand des Be- und Entlüftungsventils 301 entspricht, während in Figur 16b eine Stellung des Ventilklappensystems 365 dargestellt ist, die einer zweiten Öffnungsposition des Be- und Entlüftungsventils 301 entspricht. In der ersten Öffnungsposition ist zum Entlüften des Brennfluidtanks eine erste Ventilklappe 351 gegen eine Rückstellkraft, die durch eine Gravitationskraft eines Gegengewichts 367 aufgebaut wird, geöffnet, während in der zweiten Öffnungsposition eine zweite Ventilklappe 355 gegen eine Rückstellkraft eines Gegengewichts 369 geöffnet ist, um eine Belüftung zu ermöglichen.

In einer besonders bevorzugten Ausführungsform der Erfindung ist vorgesehen, dass das dritte bzw. vierte Ventilglied, insbesondere die Berstfenster 23, 25, 137, 137', 259, 359, ebenfalls als Austauschmodule ausgebildet sind. Dabei weisen diese Austauschmodule ebenfalls geometrische Identifizierungsmarkierungen auf, um sicherzustellen, dass ein jeweils geeignetes Ventilglied in das Be- und Entlüftungsventil eingebaut wird, falls es zu einem Auslösen des dritten bzw. vierten Ventilgliedes gekommen ist. Dies ist insbesondere wichtig, um den jeweils korrekten dritten bzw. vierten Differenzdruckwert einzustellen, bei dem das Be- und Entlüftungsventil die jeweilige Bypassleitung öffnet. Die Einstellung des Druckdifferenzwertes ist insbesondere wichtig, da durch diese die maximale Belastung des Brennfluidtanks durch einen entsprechenden Über- bzw. Unterdruck festgelegt wird.

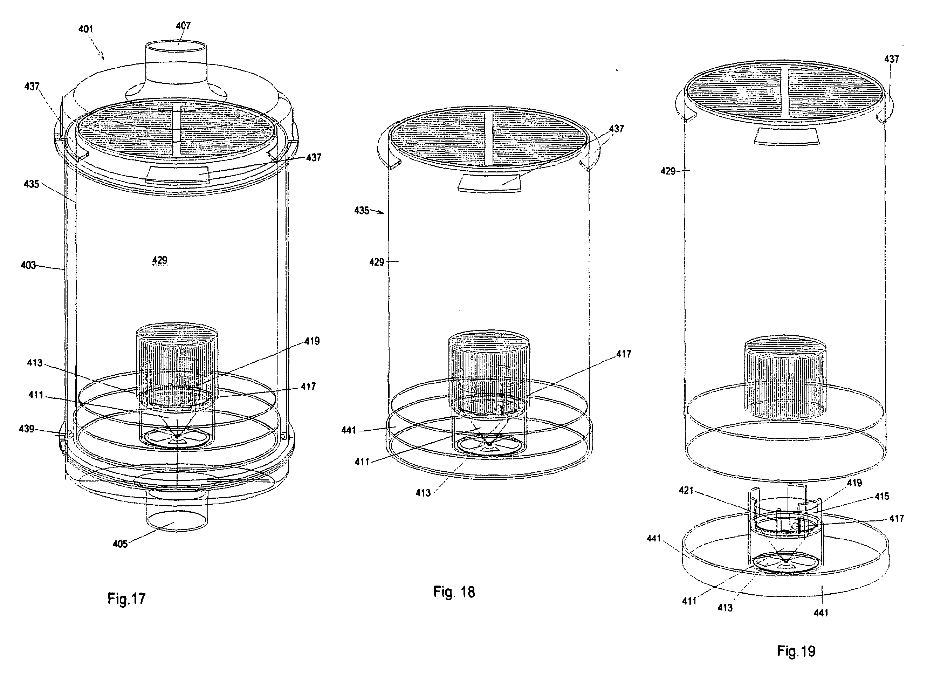

Anhand der Figuren 17 bis 22b wird im Folgenden nun eine fünfte Ausführungsform eines erfindungsgemäßen Be- und Entlüftungsventils 401 erläutert. Diejenigen Elemente, die denjenigen des Be- und Entlüftungsventils 1 entsprechen, tragen die gleichen Bezugszeichen, allerdings um den Faktor 400 erhöht. Insbesondere entspricht der Aufbau der Funktionsweise des ersten Ventilglieds, welches den Ventilkegel 411 und die Durchgangsöffnung 413 aufweist, derjenigen des ersten Ventilglieds des Be- und Entlüftungsventils 1 und der Aufbau und die Funktionsweise des zweiten Ventilgliedes, welches einen zweiten Ventilschließkörper in Form eines Kugelventils 417 aufweist, entspricht dem Aufbau und der Funktionsweise des zweiten Ventilgliedes 15 des Be- und Entlüftungsventils 1.

Im Gegensatz zu den zuvor beschriebenen Be- und Entlüftungsventilen wird die Bypassleitung jedoch durch ein drittes bzw. viertes Ventilglied geschlossen bzw. geöffnet, welches nicht im Form eines Berstfensters ausgebildet ist. Wie insbesondere Figur 17 zu entnehmen ist, ist innerhalb des Gehäuses 403 ein Einsatz 435 angeordnet. Zur Führung des Einsatzes 435 innerhalb des Gehäuses 403 sind an dem Einsatz 435 Führungselemente 437 vorgesehen. Durch die Führungselemente 437 wird eine Führung des Einsatzes 435 bei einer Bewegung in den Figuren 17 bis 19 nach oben bzw. unten relativ zu dem Gehäuse 403 erreicht. Dabei wird der Einsatz 435 so geführt, dass sich der Einsatz 435 in Figur 17 nach oben bewegen kann, aber eine Bewegung des gesamten Einsatzes 435 in Figur 17 nach unten verhindert wird.

Ein Zwischenraum zwischen dem Gehäuse 403 und einer Außenwand des Einsatzes 435 ist mittels eines Dichtungselements 439, welches insbesondere in Form eines umlaufenden O-Rings ausgebildet ist, verschlossen. Somit wird in der in Figur 17 dargestellten Position des Einsatzes 435 in dem Gehäuse 403 verhindert, dass eine Verbindung zwischen dem Ventileingang 405 und dem Ventileingang 407 unter Umgehung des ersten bzw. zweiten Ventilgliedes hergestellt wird. In der ersten Betriebsstufe des Be- und Entlüftungsventils 401 wird eine Verbindung zwischen dem Ventileingang 405 und dem Ventilausgang 407 ausschließlich durch eine Bewegung des Ventilgliedes 411 bzw. des Kugelventils 417 geschlossen bzw. freigegeben. Dabei verläuft die erste bzw. zweite Verbindungsleitung vom dem Ventileingang 405 über die Durchgangsöffnung 413, die durch den Ventilkegel 411 geschlossen bzw. geschlossen wird, bzw. die Durchgangsleitung 421, die über das Kugelventil 417 geöffnet bzw. geschlossen wird, durch das Filterelement 429 und den Ventilausgang 407.

Eine Bypassleitung 443 wird hingegen durch den Zwischenraum zwischen dem Gehäuse 403 und dem Einsatz 435 gebildet und mittels des Dichtungselements 439 in der ersten Betriebsstufe des Be- und Entlüftungsventils 401 verschlossen. Zumindest im Bereich des Ventileingangs 405 bzw. Ventilausgangs 407 fallen somit die Bypassleitung 443 und die erste bzw. zweite Verbindungsleitung zusammen.

Wie sich aus den Figuren 18 und 19 ergibt, ist der Einsatz 435 wiederum zweiteilig ausgebildet, und zwar umfasst der Einsatz 435 das Filterelement 429 und einen Aufsatz 441, wobei das Filterelement 429 kraft- und/oder formschlüssig mit einem Aufsatz 441, beispielsweise mittels einer Steck-, Clips-, Rast- und/oder Reibschlussverbindung, verbindbar ist. Der Aufsatz 441 trägt insbesondere das erste Ventilglied und das zweite Ventilglied. Die zweiteilige Ausbildung des Einsatzes 435 ermöglicht es insbesondere, dass ein Austausch des Filterelements 429 unabhängig von dem Aufsatz 441 bzw. den darauf angeordneten Ventilgliedern möglich wird.

In Figur 19 ist eine Explosionsansicht des Einsatzes 435 dargestellt, insbesondere sind das Filterelement 429 und der Aufsatz 441 voneinander getrennt.

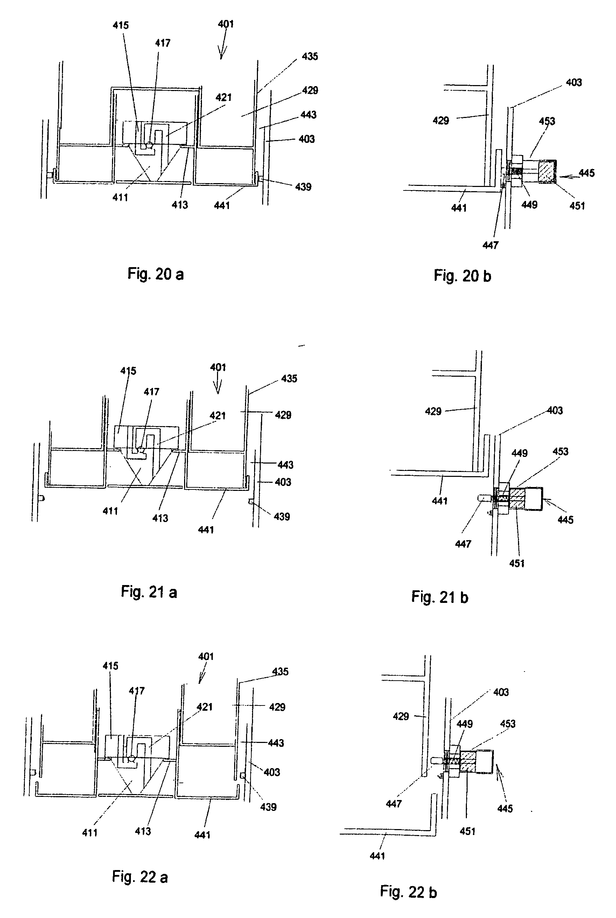

Anhand der Figuren 20a bis 20b wird im Folgenden nun die Funktionsweise der zweiten Betriebsstufe des Be- und Entlüftungsventils 401, insbesondere das Öffnen und Schließen der Bypassleitung 443 mittels des dritten oder vierten Ventilgliedes, erläutert.

In Figur 20a ist das Be- und Entlüftungsventil 401 in einer normalen Betriebsposition dargestellt. In dieser Betriebsposition ist die durch den Zwischenraum zwischen dem Einsatz 435 und dem Gehäuse 403 gebildete Bypassleitung 443 geschlossen, indem der Zwischenraum 443 über das Dichtungselement 439, an dem der Aufsatz 441 anliegt, abgedichtet ist. Insbesondere ist eine Verbindung zwischen dem Ventileingang 405 und der Bypassleitung 443 geschlossen. Das Be- und Entlüftungsventil 401 befindet sich somit in der ersten Betriebsstufe, in welcher die erste und zweite Verbindungsleitung mittels des ersten bzw. zweiten Ventilgliedes geschlossen bzw. geöffnet wird.

Um diese Betriebsposition des Be- und Entlüftungsventils 401 anzuzeigen, ist ein Indikator 445, der in Figur 20a nicht dargestellt ist, jedoch in Figur 20b gezeigt ist, vorgesehen. Der Indikator 445 umfasst einen Stift 447, der mittels eines Federelementes 449 derartig vorgespannt ist, dass er durch das Gehäuse 403 in Richtung des Aufsatzes 441 bzw. Einsatzes 435 gezwungen wird. Befindet sich jedoch der Aufsatz 441 innerhalb des Gehäuses 403 in der in der Figur 20a dargestellten Betriebsposition so wird der Stift 447 gegen die Kraft des Federelementes 449 ausgelenkt und ein Anzeigeelement 451 innerhalb des Indikators 445 in eine in Figur 20b dargestellte Position verschoben. Das Anzeigelement 451 ist innerhalb eines Gehäuses 453 angeordnet, wobei das Gehäuse 453 in dem Bereich, in dem sich das Anzeigeelement 451 in Figur 20b befindet, durchsichtig gestaltet ist. Sieht somit ein Benutzer das Anzeigeelement 451 von Außen, so kann er erkennen, dass sich das Be- und Entlüftungsventil 401 in der Figur 20a dargestellten Position befindet.

Ist ein Austausch des Filterelements 429 gewünscht, so wird der gesamte Einsatz 435 aus dem Gehäuse 403 herausgezogen, wie es in Figur 21a dargestellt ist und so das Be- und Entlüftungsventil 401 in diese Betriebsposition überführt. Das Herausziehen des Einsatzes 435 bewirkt jedoch, dass der Stift 447 nicht mittels des Aufsatzes 441 in die in der Figur 20b dargestellten Position gezwungen wird, sondern das Federelement 449 bewirkt, dass der Stift 447 und damit das Anzeigeelement 451 in die in der Figur 21b dargestellte Position bewegt wird. In diese Position ist das Anzeigeelement 451 1 von Außen nicht sichtbar, da das Gehäuse 453 in dem Bereich, indem sich das Anzeigelement 451 in Figur 21b befindet, nicht durchsichtig ausgestaltet ist.

Der Indikator 445 ermöglicht es somit, dass ein Benutzer von Außen die korrekte Position des Einsatzes 435 bzw. des Filterelements 429 bzw. des Aufsatzes 441 erkennen kann.

Kommt es nun zu einer Ausbildung eines Überdrucks, der üblicherweise zu einer Öffnung des ersten Ventilgliedes führen sollte und ist das erste Ventilglied jedoch blockiert, so kommt es ebenfalls zu einer Bewegung des Einsatzes 435 innerhalb des Gehäuses 403 in die in Figur 21a dargestellte Position. Wie Figur 21a zu entnehmen ist, entsteht ein Zwischenraum zwischen dem Dichtungselement 439 und dem Einsatz 435 bzw. dem Aufsatz 441. Diese bewirkt, dass das dritte bzw. vierte Ventilglied geöffnet wird, welches durch das Dichtungselement 439 und den Einsatz 435 bzw. Aufsatz 441 gebildet wird, und so die Bypassleitung 443 geöffnet wird, also das Be- und Entlüftungsventil 401 in die zweite Betriebsstufe überführt wird.

Kommt es hingegen zu einer Ausbildung eines übermäßigen Unterdrucks am Ventileingang 405 ohne dass es zu einer Öffnung des zweiten Ventilglieds, also das Kugelventil 417 kommt, so löst sich der Aufsatz 441 von dem Filterelement 429. Dies ist darin begründet, dass das Filterelement 429 durch die Führungselemente 437 an einer Bewegung in Figur 17 nach unten gehindert wird, der Aufsatz 441 sich jedoch relativ zu dem Filterelement 429 in Figur 17 nach unten bewegen kann. Diese Bewegung erfolgt durch Überwindung einer Verbindungskraft, insbesondere Presskraft, zwischen dem Aufsatz 441 und dem Dichtelement 439. Darüber hinaus wird auch die, insbesondere zu dieser Verbindungskraft zwischen dem Aufsatz 441 und dem Dichtelement 439 geringere, Verbindungskraft zwischen dem Filterelement 429 und dem Aufsatz 441, insbesondere der Lösung der Clips- und/oder Rastverbindung überwunden. Der Einsatz 435 separiert sich also durch die Druckunterschiede in dem Filterelement 429 und dem Aufsatz 441. Dieser Zustand ist in Figur 22a dargestellt. Wie der Figur 22a darüber hinaus zu entnehmen ist, führt diese Lösung der Verbindung zwischen dem Aufsatz 441 und dem Filterelement 429 ebenfalls zu einer Öffnung der Bypassleitung 443.

Gleichzeitig wird der Indikator 445 in die in Figur 22b dargestellte Position überführt. So kann ein Benutzer also ebenfalls entnehmen, dass sich das Filterelement 429 bzw. Einsatz 435 in einer Position befindet, die der zweiten Betriebsstufe des Be- und Entlüftungsventils 401 entspricht, in der die Bypassleitung 443 geöffnet ist, also eine Verbindung des Ventileingangs 405 und dem Ventilausgang 407 über die Bypassleitung 443 unter Umgehung des ersten Ventilglieds bzw. zweiten Ventilglieds entsteht.

In einer weiteren bevorzugten Ausführungsform der Erfindung kann die Ausbildung eines Fluidrückfuhrsystems bzw. einer Fluidrückführleitung vorgesehen sein. Diese bewirkt, dass in der Luft mitgerissene bzw. dispergierte Fluidtropfen abgeschieden und in den Brennfluidtank zurückgeführt werden. Dadurch wird eine weitere Erhöhung der Umweltverträglichkeit erreicht, da ein ungenutztes Verbrauchen des Brennfluids vermieden wird.

Bei dem in der vorstehenden Beschreibung und in den Ansprüchen angegebenen Brennfluid handelt es sich insbesondere um ein Brennliquid, bzw. eine Brennflüssigkeit, wie Heizöl.

### Bezugszeichen

- 1: Be- und Entlüftungsventil
- 3: Gehäuse
- 5: Ventileingang
- 7: Ventilausgang
- 9: Hüllrohr
- 11: Ventilkegel
- 13: Durchgangsöffnung
- 15: Ventilglied
- 17: Kugelventil
- 19: Durchgangsöffnung
- 21: Durchgangsleitung
- 23: Berstfenster
- 25: Berstfenster
- 27: Aufsatz
- 29: Filterelement
- 31: Innenraum
- 33: Innenraum
- 101: Be- und Entlüftungsventil
- 101': Be- und Entlüftungsventil
- 109: Hüllrohr
- 109': Hüllrohr
- 111: Ventilkegel
- 111': Ventilkegel
- 113: Durchgangsöffnung
- 113': Durchgangsöffnung
- 127: Aufsatz
- 127': Aufsatz
- 129: Filterelement
- 129': Filterelement
- 131: Innenraum
- 131': Innenraum
- 135: Umgehungsleitung
- 135': Umgehungsleitung
- 137: Berstfenster
- 137': Berstfenster
- 139: Filtergehäuse
- 139': Filtergehäuse
- 141: Filterdeckel
- 141': Filterdeckel
- 143: Filterboden
- 145: Schlitz
- 147: Multifunktionales Filtergranulat
- 149: Einbuchtung
- 151': Verriegelungseinrichtung
- 153': Sicherungsbolzen
- 155': Verriegelungsmechanismus
- 157': Blattfeder
- 159': Sicherungsstift
- 161': Sicherungsplatte
- 163': Aussparung
- 165': Auflagepunkt
- 167': Betätigungsstift
- 201: Be-und Entlüftungsventil
- 203: Gehäuse
- 205: Ventileingang
- 207: Ventilausgang
- 229: Filterelement
- 251: Ventilklappe
- 253: Verbindungsleitung
- 255: Ventilklappe
- 257: Verbindungsleitung
- 259: Berstfenster
- 261: Innenraum
- 263: Innenraum
- 301: Be-und Entlüftungsventil
- 303: Gehäuse
- 305: Ventileingang
- 307: Ventilausgang
- 329: Filterelement
- 351: Ventilklappe
- 355: Ventilklappe
- 359: Berstfenster
- 365: Klappensystem
- 367: Gegengewicht
- 369: Gegengewicht
- 401: Be- und Entlüftungsventil
- 403: Gehäuse
- 405: Ventileingang
- 407: Ventilausgang
- 411: Ventilkegel
- 413: Durchgangsöffnung
- 415: Ventilglied
- 417: Kugelventil
- 419: Durchgangsöffnung
- 421: Durchgangsleitung
- 429: Filterelement
- 435: Einsatz
- 437: Führungselement
- 439: Dichtungselement
- 441: Aufsatz
- 443: Bypassleitung
- 445: Indikator
- 447: Stift
- 449: Federelement
- 451: Anzeigelement
- 453: Gehäuse

- A, B: Ausschnitt
- C, D, E: Richtung

## Patentansprüche

1. Be- und Entlüftungsventil (1, 101, 201, 301, 401) mit zumindest einem Ventileingang (5, 105, 205, 305, 405) und zumindest einem Ventilausgang (7, 107, 207, 307, 407), wobei der Ventileingang (5, 105, 205, 305, 405) mit zumindest einer Öffnung eines Brennfluidtanks, insbesondere Heizöltanks, verbindbar ist,
der Ventileingang (5, 105, 205, 305, 405) mit einer Entlüftungsöffnung zur Verbindung eines Innenraums des Brennfluidtanks mit einer Atmosphäre, in die der Ventilausgang (7, 107, 207, 307, 407) mündet, verbindbar ist, das Be- und Entlüftungsventil (1, 101, 201, 301, 401) derartig ausgebildet ist, dass in dem Fall, in dem ein im Bereich des Ventileingangs (5, 105, 205, 305, 405) herrschender Druck um eine erste Druckdifferenz höher ist als ein an dem Ventilausgang (7, 107, 207, 307, 407) herrschender Druck, in einer ersten Öffnungsposition des Be- und Entlüftungsventils (1, 101, 201, 301, 401) eine Verbindung zwischen dem Ventileingang (5, 105, 205, 305, 405) und dem Ventilausgang (7, 107, 207, 307, 407) über eine erste Verbindungsleitung (253), in der zumindest ein erstes Ventilglied (11, 111, 251, 351) angeordnet ist, geöffnet ist,
in dem Fall, in dem ein im Bereich des Ventileingangs (5, 105, 205, 305, 405) herrschender Druck um eine zweite Druckdifferenz geringer ist als ein an dem Ventilausgang (7, 107. 207, 307, 407) herrschender Druck, in einer zweiten Öffnungsposition des Be- und Entlüftungsventils (1, 101, 201, 301, 401) eine Verbindung zwischen dem Ventilausgang (7, 107, 207, 307, 407) und dem Ventileingang (5, 105, 205, 305, 405) über eine zweite Ventilleitung (257), in der zumindest ein zweites Ventilglied (15, 255, 355) angeordnet ist, geöffnet ist, wobei ferner zumindest eine das erste Ventilglied (11, 111, 251, 351) und das zweite Ventilglied (15, 255, 355) umgehende und eine Verbindung zwischen dem Ventileingang (5, 105, 205, 305, 405) und dem Ventilausgang (7, 107, 207, 307, 407) bereitstellende Bypassleitung vorgesehen ist, und die Bypassleitung und die erste Verbindungsleitung (253) und/oder die Bypassleitung und die zweite Verbindungsleitung (257) zumindest bereichsweise in einem ausgebildet sind, **dadurch gekennzeichnet, dass**
bei einer Fehlfunktion des ersten Ventilglieds (11, 111, 251, 351) und/oder des zweiten Ventilglieds (15, 255, 355) ein irreversible Öffnung der Verbindung zwischen dem Ventileingang und dem Ventilausgang über die Bypassleitung durchführbar ist.

2. Be- und Entlüftungsventil nach Anspruch 1, **dadurch gekennzeichnet, dass** das Be- und Entlüftungsventil (1, 101, 201, 301) derartig ausgebildet ist, dass eine Verbindung zwischen dem Ventileingang (5, 105, 205, 305) und dem Ventilausgang (7, 107, 207, 307) in einer Geschlossenposition des Be- und Entlüftungsventils (1, 101, 201, 301) geschlossen ist, wenn ein an dem Ventileingang (5, 105, 205, 305) herrschender Druck höher als ein Druck an dem Ventilausgang (7, 107, 207, 307) ist und die Druckdifferenz zwischen dem Ventileingang (5, 105, 205, 305) und dem Ventilausgang (7, 107, 207, 307) geringer als die erste Druckdifferenz ist, und/oder
wenn ein an dem Ventileingang (5, 105, 205, 305) herrschender Druck geringer als ein Druck an dem Ventilausgang (7, 107, 207, 307) ist und die Druckdifferenz zwischen dem Ventileingang (5, 105, 205, 305) und dem Ventilausgang (7, 107, 207, 307) geringer als die zweite Druckdifferenz ist,
in der ersten Öffnungsposition des Be- und Entlüftungsventils (1, 101, 201, 301) mittels des ersten Ventilgliedes (11, 111, 251, 351) eine Verbindung zwischen dem Ventileingang (5, 105, 205, 305) und dem Ventilausgang (7, 107, 207, 307) durch die erste Verbindungsleitung (253) geöffnet ist, vorzugsweise um eine Luftströmung von dem Ventileingang (5, 105, 205, 305) zu dem Ventilausgang (7, 107, 207, 307) zu ermöglichen und/oder
in der zweiten Öffnungsposition des Be- und Entlüftungsventils (1, 101, 201, 301) mittels des zweiten Ventilgliedes (15, 255, 355) eine Verbindung zwischen dem Ventilausgang (7, 107, 207, 307) und dem Ventileingang (5, 105, 205, 305) geöffnet ist, vorzugsweise um eine Luftströmung von dem Ventilausgang (7, 107, 207, 307) zu dem Ventileingang (5, 105, 205, 305) zu ermöglichen, wobei vorzugsweise
in der ersten Öffnungsposition des Be- und Entlüftungsventils (1, 101, 201, 301) die zweite Verbindungsleitung (257) mittels des zweiten Ventilgliedes (15, 255, 355) geschlossen ist, in der zweiten Öffnungsposition des Be- und Entlüftungsventils (1, 101, 201, 301) die erste Verbindungsleitung (253) mittels des ersten Ventilgliedes (11, 111, 251, 351) geschlossen ist und/oder in der Geschlossenposition des Be- und Entlüftungsventils (1, 101, 201, 301) die Verbindung zwischen dem Ventileingang (5, 105, 205, 305) und dem Ventilausgang (7, 107, 207, 307) durch die zweite Verbindungsleitung (257) mittels des zweiten Ventilgliedes (15, 255, 355) geschlossen ist als auch durch die erste Verbindungsleitung (253) mittels des ersten Ventilgliedes (11, 111, 251, 351) geschlossen ist.

3. Be- und Entlüftungsventil nach Anspruch 2, **dadurch gekennzeichnet, dass** die erste Verbindungsleitung (253) und die zweite Verbindungsleitung (257) und/oder das erste Ventilglied und das zweite Ventilglied zumindest bereichsweise in einem ausgebildet sind, insbesondere die erste Öffnungsposition und die zweite Öffnungsposition des Be-und Entlüftungsventils identisch sind,
das erste Ventilglied zumindest einen ersten Ventilschließkörper (11, 111, 251, 351) umfasst, mittels dem eine erste Durchgangsöffnung (13, 113) in der ersten Verbindungsleitung verschließbar ist, wobei vorzugsweise in dem ersten Ventilschließkörper (11) zumindest eine erste Durchgangsleitung (21) ausgebildet ist, die zumindest teilweise die zweite Verbindungsleitung bildet, insbesondere in der ersten Durchgangsleitung (21) das zweite Ventilglied (15), vorzugsweise umfassend zumindest einen zweiten Ventilschließkörper (17), mittels dem zumindest eine zweite Durchgangsöffnung (19) der ersten Durchgangsleitung (21) verschließbar ist, angeordnet ist, und/oder
das zweite Ventilglied zumindest einen zweiten Ventilschließkörper umfasst, mittels dem eine zweite Durchgangsöffnung in der zweiten Verbindungsleitung verschließbar ist, wobei vorzugsweise in dem zweiten Ventilschließkörper zumindest eine zweite Durchgangsleitung ausgebildet ist, die zumindest teilweise die erste Verbindungsleitung bildet, insbesondere in der zweiten Durchgangsleitung das erste Ventilglied, vorzugsweise umfassend zumindest einen ersten Ventilschließkörper, mittels dem zumindest eine erste Durchgangsöffnung der zweiten Durchgangsleitung verschließbar ist, angeordnet ist.

4. Be- und Entlüftungsventil nach einem der vorangehenden Ansprüche, **gekennzeichnet durch**
zumindest ein in der Bypassleitung angeordnetes drittes Ventilglied (23, 137, 259, 359) und/oder zumindest ein in der Bypassleitung angeordnetes viertes Ventilglied (25, 137, 259, 359), wobei das dritte Ventilglied (23, 137, 259, 359) derart ausgebildet ist, dass mittels des dritten Ventilgliedes (23, 137, 259, 359) eine Verbindung zwischen dem Ventileingang (5, 105, 205, 305) und dem Ventilausgang (7, 107, 207, 307) **durch** die Bypassleitung freigegeben wird, wenn ein im Bereich des Ventileingangs (5, 105, 205, 305) herrschender Druck um eine dritte Druckdifferenz höher ist als ein an dem Ventilausgang (7, 107, 207, 307) herrschender Druck, wobei die dritte Druckdifferenz, insbesondere betragsmäßig, größer als die erste Druckdifferenz ist, und/oder das vierte Ventilglied (25, 137, 259, 359) derart ausgebildet ist, dass mittels des vierten Ventilgliedes (25, 137, 259, 359) eine Verbindung zwischen dem Ventileingang (5, 105, 205, 305) und dem Ventilausgang (7, 107, 207, 307) **durch** die Bypassleitung freigegeben wird, wenn ein im Bereich des Ventileingangs (5, 105, 205, 305) herrschender Druck um eine vierte Druckdifferenz geringer ist als ein an dem Ventilausgang (7, 107, 207, 307) herrschender Druck, wobei die vierte Druckdifferenz, insbesondere betragsmäßig, größer als die zweite Druckdifferenz ist, wobei vorzugsweise
das dritte Ventilglied (137, 259, 359) und/oder das vierte Ventilglied (137, 259, 359) zumindest bereichsweise in einem ausgebildet sind, das dritte Ventilglied und/oder das vierte Ventilglied zumindest ein Berstfenster (23, 25, 137, 259, 359) umfasst bzw. umfassen und/oder das dritte und/oder vierte Ventilglied einen in einem Gehäuse (403) des Be- und Entlüftungsventils bewegbar gelagerten Einsatz (435) umfasst.

5. Be- und Entlüftungsventil nach Anspruch 4, **dadurch gekennzeichnet, dass** in einer ersten Position des Einsatzes (435) relativ zu dem Gehäuse (403) eine Verbindung des Ventileingangs (405) und/oder Ventilausgangs (407) mit einem Zwischenraum, der insbesondere bereichsweise zwischen dem Einsatz (435) und dem Gehäuse (403) ausgebildet ist und/oder bereichsweise die Bypassleitung (443) bildet, verschlossen ist, vorzugsweise mittels eines zwischen dem Einsatz (435) und dem Gehäuse (403) angeordneten Dichtungselements (439) und in zumindest einer zweiten Position des Einsatzes (435) relativ zu dem Gehäuse (403) die Verbindung des Zwischenraums (443) und des Ventilausgangs (407) und/oder des Ventileingangs (405) geöffnet ist, wobei insbesondere die erste Position und die zweite Position sich dadurch unterscheiden, dass der gesamte Einsatz (435) in unterschiedlichen Positionen innerhalb des Gehäuses (403) angeordnet ist und/oder zumindest eine Komponente (441) des Einsatzes (435), insbesondere nach einer zumindest teilweisen Separierung von zumindest einer weiteren Komponente (429) des Einsatzes (435) und/oder einer Relativbewegung zu der weiteren Komponente in unterschiedlichen Positionen innerhalb des Gehäuses (403) angeordnet ist, und/oder die erste Position und/oder die zweite Position mittels zumindest eines Indikators (445) anzeigbar ist.

6. Be- und Entlüftungsventil nach einem der vorangehenden Ansprüche, **dadurch gekennzeichnet, dass**
das erste Ventilglied (111, 251, 351), das zweite Ventilglied (15, 255, 355), das dritte Ventilglied (23, 137, 259, 359) und/oder das vierte Ventilglied (25, 137, 259, 359), insbesondere der erste Ventilschließkörper (11) und/oder der zweite Ventilschließkörper (17) mittels zumindest einer Rückstellkraft in eine Schließposition gezwungen wird bzw. werden, wobei die Rückstellkraft vorzugsweise eine Gravitationskraft, eine mittels zumindest eines Rückstellelements, wie eines Federelements, erzeugte Kraft und/oder eine Druckkraft umfasst, und/oder zumindest ein Kugelventil (17), ein Membranventil, ein Klappenventil (251, 351, 255, 355) umfasst und/oder mittels der Rückstellkraft die erste Druckdifferenz, die zweite Druckdifferenz, die dritte Druckdifferenz und/oder die vierte Druckdifferenz einstellbar ist bzw. sind, und/oder
zumindest ein in der ersten Verbindungsleitung (253), der zweiten Verbindungsleitung (257), der Bypassleitung, der ersten Durchgangsleitung und/oder der zweiten Durchgangsleitung angeordnetes Filterelement (29, 129, 229, 329) vorgesehen ist, wobei vorzugsweise
das Filterelement (29, 129, 229, 329) zumindest ein, insbesondere multifunktionales, Filtermaterial mit hochporöser Struktur, wie ein Aktivkohlematerial, umfasst, wobei das Filtermaterial vorzugsweise Mikroporen, insbesondere mit einer Porengröße von weniger als ungefähr 2 nm, Mesoporen, insbesondere mit einer Porengröße von ungefähr 2 nm bis ungefähr 50nm, und/oder Makroporen, insbesondere mit einer Porengröße von mehr als ungefähr 50nm, umfasst und/oder zumindest teilweise als, insbesondere schüttfähiges, Granulat (147) und/oder als gepresste Tablette, insbesondere Kohlekomprette und/oder als, insbesondere in einem Filtergehäuse (139) anordbare, Filterkassette, vorliegt, und/oder das Filterelement (129) mittels zumindest einer Verriegelungseinrichtung (151') mit zumindest einer weiteren Komponente des Be- und Entlüftungsventils (101'), wie einer Umgehungsleitung (135'), einem Gehäuse und/oder einem Hüllrohr verriegelbar ist, wobei vorzugsweise das Filterelement (129') in Abhängigkeit von einem Betriebszustand des dritten Ventilglieds (137') und/oder des vierten Ventilglieds (137') mit der Komponente des Be- und Entlüftungsventils (101') verriegelbar ist und/oder die Verriegelungseinrichtung (151') zumindest einen mit der weiteren Komponente (135') oder dem Filterelement in Wirkverbindung stehenden Sicherungsbolzen (153'), zumindest einem mit der weiteren Komponente und/oder dem Filterelement (129') in Wirkverbindung stehenden Verriegelungsmechanismus (155'), zumindest ein Federelement (157'), zumindest einen Sicherungsstift (159'), zumindest eine Sicherungsplatte (161'), zumindest eine Aussparung (163) und/oder zumindest einen Betätigungsstift (167') umfasst.

7. Be- und Entlüftungsventil nach einem der vorangehenden Ansprüche, **gekennzeichnet durch**
zumindest eine Fluidrückführleitung in Verbindung mit dem Ventileingang und/oder dem Brennfluidtank einerseits und dem Ventilausgang, dem ersten Ventilglied, dem zweiten Ventilglied, dem dritten Ventilglied, dem vierten Ventilglied, dem ersten Ventilschließkörper, dem zweiten Ventilschließkörper, der ersten Verbindungsleitung, der zweiten Verbindungsleitung, der Bypassleitung, der ersten Durchgangsleitung, der zweiten Durchgangsleitung und/oder dem-Filterelement andererseits und/oder **dadurch gekennzeichnet, dass**
das dritte Ventilglied (23, 137, 259, 359), das vierte Ventilglied (25, 137, 259, 359) und/oder das Filterelement (29, 129, 229, 329) zumindest bereichsweise als Austauschmodul ausgebildet ist bzw. sind.

8. Be- und Entlüftungsventil nach einem der vorangehenden Ansprüche, **dadurch gekennzeichnet, dass**
das Filterelement (29, 129, 229, 329) zumindest teilweise als ein in zumindest ein Gehäuse (3, 103, 203. 303) des Be- und Entlüftungsventils (1, 101, 201, 301) einsetzbares erstes Austauschmodul (139) ausgebildet ist, wobei das erste Austauschmodul zumindest eine erste geometrische Identifizierungsmarkierung (149) aufweist.

9. Be- und Entlüftungsventil nach Anspruch 8, **dadurch gekennzeichnet, dass** zumindest ein Filtergehäuse (139) vorgesehen ist, wobei das Filtergehäuse (139) vorzugsweise mittels eines Filterdeckels (141) verschließbar ist, und in dem Filtergehäuse (139) zumindest ein, insbesondere multifunktionales, Filtermaterial (147), vorzugsweise ein Filtermaterial mit hochporöser Struktur, wie ein Aktivkohlematerial, zumindest zeitweise und/oder zumindest teilweise angeordnet ist, wobei das Filtermaterial (147) vorzugsweise Mikroporen, insbesondere mit einer Porengröße von weniger als ungefähr 2 nm, Mesoporen, insbesondere mit einer Porengröße von ungefähr 2 nm bis ungefähr 50nm, und/oder Makroporen, insbesondere mit einer Porengröße von mehr als ungefähr 50 nm, umfasst und/oder als, insbesondere schüttfähiges, Granulat (147), als gepresste Tablette, insbesondere Kohlekomprette, und/oder als, insbesondere in dem Filtergehäuse (139) anordbare, Filterkassette vorliegt,
das erste Austauschmodul zumindest teilweise das Filtergehäuse (139) und/oder das Filtermaterial (147), insbesondere die Filterkassette, umfasst,
das erste Austauschmodul, das Filtergehäuse (139), der Filterdeckel (141) und/oder das Filtermaterial (147), insbesondere die Filterkassette, zumindest bereichsweise zumindest ein Kunststoffmaterial umfasst bzw. umfassen,
die erste geometrische Identifizierungsmarkierung zumindest eine Oberflächenform, insbesondere in Form einer Nut, einer Vertiefung, einer Erhebung, einer Umfangsform. wie einer quadratischen, kreisförmigen, rechteckförmigen, elliptischen und/oder kegelförmigen Umfangsform, umfasst, wobei vorzugsweise das Gehäuse (139) und/oder eine mit dem Filterelement (129) in Kontakt bringbare Oberfläche des Be- und Entlüftungsventils (101), eine zu der geometrischen Identifizierungsmarkierung komplementäre Oberflächenform (135) aufweist,
die erste geometrische Identifizierungsmarkierung (143) repräsentativ für eine charakteristische Größe des Filterelements (129), wie einen maximalen Volumendurchsatz, einen minimalen Volumendurchsatz, ein Volumen des Filtermaterials, eine Porengröße des Filtermaterials und/oder ein minimales und/oder maximales erlaubtes Druckgefälle an dem Filterelementen (129), ist, und/oder
das erste Austauschmodul und/oder das Be- und Entlüftungsventil derart ausgebildet ist bzw. sind, dass das erste Austauschmodul nur dann aus dem Be- und Entlüftungsventil entnehmbar und/oder in das Be- und Entlüftungsventil einführbar ist, wenn ein erstes, ein zweites, ein drittes und/oder ein viertes Ventilglied des Be- und Entlüftungsventils in einer geschlossenen Ventilsposition ist bzw. sind.

10. Be- und Entlüftungsventil nach einem der vorangehenden Ansprüche, **dadurch gekennzeichnet, dass**
ein Ventilglied, insbesondere das dritte Ventilglied und/oder das vierte Ventilglied des Be-und Entlüftungsventils, zumindest teilweise als ein in zumindest ein Gehäuse des Be- und Entlüftungsventils einsetzbares zweites Austauschmodul ausgebildet ist, wobei das zweite Austauschmodul zumindest eine zweite geometrische Identifizierungsmarkierung aufweist.

11. Be- und Entlüftungsventil nach Anspruch 10, **dadurch gekennzeichnet, dass** die zweite geometrische Identifizierungsmarkierung zumindest eine Oberflächenform, insbesondere in Form einer Nut, einer Vertiefung, einer Erhebung, einer Umfangsform, wie einer quadratischen, kreisförmigen, rechteckförmigen, elliptischen und/oder kegelförmigen Umfangsform, umfasst, wobei vorzugsweise das Gehäuse und/oder eine mit dem Ventilglied in Kontakt bringbare Oberfläche des Be- und Entlüftungsventils, eine zu der zweiten geometrischen Identifizierungsmarkierung komplementäre Oberflächenform aufweist und/oder
die zweite geometrische Identifizierungsmarkierung repräsentativ für eine charakteristische Größe des Ventilsglieds, wie eine maximale Druckdifferenz zwischen einem Eingang und einem Ausgang des Ventilsgliedes, in der das Ventilglied in einer Geschlossenenposition ist und/oder eine minimale Druckdifferenz zwischen einem Eingang und einem Ausgang des Ventilsgliedes, in der das Ventilglied in einer Offenposition ist, ist.

12. Brennfluidtank, insbesondere mit zumindest einer Brennfluidzufuhrleitung und/oder zumindest einer Brennfluidabfiihrleitung, umfassend zumindest eine Entlüftungsöffnung zur Verbindung eines Innenraums des Brennfluidtanks mit einer den Brennfluidtank umgebenden Atmosphäre, wobei mittels der Entlüftungsöffnung ein in dem Brennfluidtank vorhandener Druck, der höher oder niedriger als ein Umgebungsdruck in der umgebenden Atmosphäre ist, an den Umgebungsdruck anpassbar ist, **gekennzeichnet durch** zumindest ein mit der Entlüftungsöffnung verbundenes Be- und Entlüftungsventil (1, 101, 201, 301) nach einem der vorangehenden Ansprüche.

13. Verfahren zur Be- und Entlüftung eines Brennfluidtanks nach Anspruch 12, umfassend die Verbindung zumindest eines Be- und Entlüftungsventils (1, 101, 201, 301), nach einem der Ansprüche 1 bis 11 mit zumindest einer Be- und Entlüftungsöffnung des Brennfluidtanks, wobei
zumindest ein Ventileingang (5, 105, 205. 305) des Be- und Entlüftungsventils (1, 101, 201, 301) mit der Be- und Entlüftungsöffnung verbunden wird und zumindest ein Ventilausgang (7, 107, 207, 307) des Be- und Entlüftungsventils (1, 101, 201, 301) mit einer den Brennfluidtank umgebenden Atmosphäre verbunden wird und in dem Fall, in dem ein im Bereich des Ventileingangs (5, 105, 205, 305) herrschender Druck um eine erste Druckdifferenz höher ist als ein an einem Ventilausgang (7, 107, 207, 307) herrschender Druck in einer ersten Öffnungsposition des Be- und Entlüftungsventils (1, 101, 201, 301) eine Verbindung zwischen dem Ventileingang (5, 105, 205, 305) und dem Ventilausgang (7, 107, 207, 307) über eine erste Verbindungsleitung (253) geöffnet wird, in dem Fall, in dem ein im Bereich des Ventileingangs (5, 105, 205, 305) herrschender Druck um eine zweite Druckdifferenz geringer ist als ein an dem Ventilausgang (7, 107, 207, 307) herrschender Druck in einer zweiten Öffnungsposition des Be- und Entlüftungsventils (1, 101, 201, 301) eine Verbindung zwischen dem Ventilausgang (7, 107, 207, 307) und dem Ventileingang (5, 105, 205, 305) über eine zweite Verbindungsleitung (257) geöffnet wird, und ferner zumindest eine Bypassleitung derartig bereitgestellt wird, dass die Bypassleitung und die erste Verbindungsleitung (253) und/oder die Bypassleitung und die zweite Verbindungsleitung (257) zumindest bereichsweise in einem ausgebildet sind, **dadurch gekennzeichnet dass**,
mittels der Bypassleitung bei einer Fehlfunktion eines in der ersten Verbindungsleitung (253) angeordneten ersten Ventilglieds (11, 111, 251, 351) und/oder eines in der zweiten Verbindungsleitung (257) angeordneten Ventilglieds (15, 255, 355) eine irreversible Öffnung der Verbindung zwischen dem Ventileingang und dem Ventilausgang durchgeführt wird.

14. Verfahren nach Anspruch 13, **dadurch gekennzeichnet, dass** eine Verbindung zwischen dem Ventileingang (5, 105, 205, 305) und dem Ventilausgang (7, 107, 207, 307) in einer Geschlossenposition des Be- und Entlüftungsventils (1, 101, 201, 301) geschlossen wird, wenn ein an dem Ventileingang (5, 105, 205, 305) herrschender Druck höher als ein Druck an dem Ventilausgang (7, 107, 207, 307) ist und die Druckdifferenz zwischen dem Ventileingang (5, 105, 205, 305) und dem Ventilausgang (7, 107, 207, 307) geringer als die erste Druckdifferenz ist, und/oder wenn ein an dem Ventileingang (5, 105, 205, 305) herrschender Druck geringer als ein Druck an dem Ventilausgang (7, 107, 207, 307) ist und die Druckdifferenz zwischen dem Ventileingang (5, 105, 205, 305) und dem Ventilausgang (7, 107, 207, 307) geringer als die zweite Druckdifferenz ist und/oder
in der ersten Öffnungsposition des Be- und Entlüftungsventils (1, 101, 201, 301) die zweite Verbindungsleitung mittels eines zweiten Ventilgliedes (15, 255, 355) geschlossen wird, in einer zweiten Öffnungsposition des Be- und Entlüftungsventils (1, 101, 201, 301) die erste Verbindungsleitung mittels eines ersten Ventilgliedes (11, 111, 251. 351) geschlossen wird und/oder in der Geschlossenposition des Be- und Entlüftungsventils (1, 101, 201, 301) die Verbindung zwischen dem Ventileingang (5, 105, 205, 305) und dem Ventilausgang (7, 107, 207, 307) durch die zweite Verbindungsleitung mittels des zweiten Ventilgliedes (15, 255, 355) geschlossen wird als auch durch die erste Verbindungsleitung mittels des ersten Ventilgliedes (11, 111, 251, 351) geschlossen wird.

15. Verfahren nach Anspruch 13 oder 14, **dadurch gekennzeichnet, dass** mittels der Bypassleitung, das erste Ventilglied (11, 111, 251, 351) und/oder das zweite Ventilglied (15, 255, 355) umgegangen wird und/oder mittels eines in der Bypassleitung angeordneten dritten Ventilgliedes (23, 137, 259, 359) eine Verbindung zwischen dem Ventileingang (5, 105, 205, 305) und dem Ventilausgang (7, 107, 207, 307) durch die Bypassleitung freigegeben wird, vorzugsweise wenn ein im Bereich des Ventileingangs (5, 105, 205, 305) herrschender Druck um eine dritte Druckdifferenz höher ist als ein an dem Ventilausgang (7, 107, 207, 307) herrschender Druck, wobei die dritte Druckdifferenz, insbesondere betragsmäßig, größer als die erste Druckdifferenz ist, und/oder mittels eines vierten Ventilgliedes (25, 137, 259, 359) eine Verbindung zwischen dem Ventileingang (5, 105, 205, 305) und dem Ventilausgang (7, 107, 207, 307) durch die Bypassleitung freigegeben wird, vorzugsweise wenn ein im Bereich des Ventileingangs (5, 105, 205, 305) herrschender Druck um eine vierte Druckdifferenz geringer ist als ein an dem Ventilausgang (7, 107, 207, 307) herrschender Druck, wobei die vierte Druckdifferenz, insbesondere betragsmäßig, größer als die zweite Druckdifferenz ist.

## Claims

1. Venting and aerating valve (1, 101, 201, 301, 401) with at least one valve inlet (5, 105, 205, 305, 405) and at least one valve outlet (7, 107, 207, 307, 407), wherein the valve inlet (5, 105, 205, 305, 405) can be connected to at least one opening of a combustible fluid tank, in particular a heating oil tank,
the valve inlet (5, 105, 205, 305, 405) can be connected to a vent opening for connection of an interior space of the combustion fluid tank to an atmosphere into which the valve outlet (7, 107, 207, 307, 407) opens, the venting and aerating valve (1, 101, 201, 301, 401) is designed such that, in the case of a pressure in the region of the valve inlet (5, 105, 205, 305, 405) being higher by a first pressure difference than a pressure at the valve outlet (7, 107, 207, 307, 407), in a first opening position of the venting and aerating valve (1, 101, 201, 301, 401) a connection between the valve inlet (5, 105, 205, 305, 405) and the valve outlet (7, 107, 207, 307, 407) is open via a first connection line (253) wherein at least one first valve member (11, 111, 151, 351) is arranged,
in the case of a pressure in the region of the valve inlet (5, 105, 205, 305, 405) being lower by a second pressure difference than a pressure at the valve outlet (7, 107, 207, 307, 407), in a second opening position of the venting and aerating valve (1, 101, 201, 301, 401) a connection between the valve outlet (7, 107, 207, 307, 407) and the valve inlet (5, 105, 205, 305, 405) is open via a second connection line (257) wherein at least one second valve member (15, 225, 355) is arranged, wherein further at least one bypass line is provided, bypassing the first valve member (11, 111, 251, 351) and the second valve member (15, 255, 355) and providing a connection between the valve inlet (5, 105, 205, 305, 405) and the valve outlet (7, 107, 207, 307, 407), and
the bypass line and the first connection line (253) and/or the bypass line and the second connection line (257) are integrally formed at least sectionally, **characterized in that** in the case of a malfunction of the first vale member (11, 111, 251, 351) and/or the second valve member (15, 255, 355) an irreversible opening of the connection between the valve inlet and the valve outlet can be effected via the bypass line.

2. Venting and aerating valve according to claim 1, **characterized in that** the venting and aerating valve (1, 101, 201, 301) is designed such that a connection between the valve inlet (5, 105, 205, 305) and the valve outlet (7, 107, 207, 307) is closed in a closed position of the venting and aerating valve (1, 101, 201, 301) if a pressure at the valve inlet (5, 105, 205, 305) is higher than a pressure at the valve outlet (7, 107, 207, 307) and the pressure difference between the valve inlet (5, 105, 205, 305) and the valve outlet (7, 107, 207, 307) is smaller than the first pressure difference, and/or
if a pressure at the valve inlet (5, 105, 205, 305) is lower than a pressure at the valve outlet (7, 107, 207, 307) and the pressure difference between the valve inlet (5, 105, 205, 305) and the valve outlet (7, 107, 207, 307) is smaller than the second pressure difference, in the first opening position of the venting and aerating valve (1, 101, 201, 301) a connection between the valve inlet (5, 105, 205, 305) and the valve outlet (7, 107, 207, 307) through the first connection line (253) is open by means of the first valve member (11, 111, 251, 351), preferably to enable an air flow from the valve inlet (5, 105, 205, 305) to the valve outlet (7, 107, 207, 307), and/or
in the second opening position of the venting and aerating valve (1, 101, 201, 301) a connection between the valve outlet (7, 107, 207, 307) and the valve inlet (5, 105, 205, 305) is open by means of the second valve member (15, 255, 355), preferably to enable an air flow from the valve outlet (7, 107, 207, 307) to the valve inlet (5, 105, 205, 305), wherein preferably
in the first opening position of the venting and aerating valve (1, 101, 201, 301) the second connection line (257) is closed by means of the second valve member (15, 255, 355), in the second opening position of the venting and aerating valve (1, 101, 201, 301) the first connection line (253) is closed by means of the first valve member (11, 111, 251, 351) and/or in the closed position of the venting and aerating valve (1, 101, 201, 301) the connection between the valve inlet (5, 105, 205, 305) and the valve outlet (7, 107, 207, 307) through the second connection line (257) is closed by means of the second valve member (15, 255, 355) and through the first connection line (253) is closed by means of the first valve member (11, 111, 251, 351).

3. Venting and aerating valve according to claim 2, **characterized in that** the first connection line (253) and the second connection line (257) and/or the first valve member and the second valve member are integrally formed at least sectionally, in particular the first opening position and the second opening position of the venting and aerating valve are identical,
the first valve member comprises at least one first valve closing body (11, 111, 251, 351), by means of which a first passage opening (13, 113) in the first connection line can be closed, wherein preferably in the first valve closing body (11) at least one first passage line (21) is designed which forms at least partly the second connection line, in particular in the first passage line (21) the second valve member (15) is arranged, preferably comprising at least one second valve closing body (17), by means of which at least one second passage opening (19) of the first passage line (21) can be closed, and/or
the second valve member comprises at least one second valve closing body, by means of which a second passage opening in the second connection line can be closed, wherein preferably in the second valve closing body at least one second passage line is designed which forms at least partly the first connection line, in particular in the second passage line the first valve member is arranged, preferably comprising at least one first valve closing body, by means of which at least one first passage opening in the second passage line can be closed.

4. Venting and aerating valve according to any one of the preceding claims, **characterized by** at least one third valve member (23, 137, 259, 359) arranged in the bypass line and/or at least one fourth valve member (25, 137, 259, 359) arranged in the bypass line, wherein the third valve member (23, 137, 259, 359) is designed such that by means of the third valve member (23, 137, 259, 359) a connection between the valve inlet (5, 105, 205, 305) and the valve outlet (7, 107, 207, 307) through the bypass line is opened if a pressure in the region of the valve inlet (5, 105, 205, 305) is higher by a third pressure difference than a pressure at the valve outlet (7, 107, 207, 307), wherein the third pressure difference, in particular in terms of its magnitude, is greater than the first pressure difference, and/or the fourth valve member (25, 137, 259, 359) is designed such that by means of the fourth valve member (25, 137, 259, 359) a connection between the valve inlet (5, 105, 205, 305) and the valve outlet (7, 107, 207, 307) through the bypass line is opened if a pressure in the region of the valve inlet (5, 105, 205, 305) is lower by a fourth pressure difference than a pressure at the valve outlet (7, 107, 207, 307), wherein the fourth pressure difference, in particular in terms of its magnitude, is greater than the second pressure difference, wherein preferably
the third valve member (137, 259, 359) and/or the fourth valve member (137, 259, 359) are integrally formed at least sectionally, the third valve member and/or the fourth valve member comprises or comprise at least one rupture window (23, 25, 137, 259, 359) and/or the third and/or fourth valve member comprises an insert (435) which is movably supported in a housing (403) of the venting and aerating valve.

5. Venting and aerating valve according to claim 4, **characterized in that** in a first position of the insert (435) relative to the housing (403) a connection of the valve inlet (405) and/or the valve outlet (407) to an intermediate space, which in particular is formed sectionally between the insert (435) and the housing (403) and/or which sectionally forms the bypass line (433), is closed, preferably by means of a sealing element (439) arranged between the insert (443) and the housing (403), and in at least one second position of the insert (435) relative to the housing (403) the connection of the intermediate space (443) and the valve outlet (407) and/or the valve inlet (405) is open, wherein in particular the first position and the second position differ **in that** the entire insert (435) is arranged in different positions inside the housing (403) and/or at least one component (441) of the insert (435), in particular after an at least partial separation from at least one further component (429) of the insert (435) and/or a movement relative to the further component, is arranged in different positions inside the housing (403), and/or the first position and/or the second position can be indicated by means of at least one indicator (445).

6. Venting and aerating valve according to any one of the preceding claims, **characterized in that**
the first valve member (111, 251, 351), the second valve member (15, 255, 355), the third valve member (23, 137, 259, 359) and/or the fourth valve member (25, 137, 259, 359), in particular the first valve closing body (11) and/or the second valve closing body (17) is or are forced into a closing position by means of at least one return force, wherein the return force comprises preferably a gravitational force, a force generated by means of at least one return element, such as a spring element, and/or a compressive force, and/or comprises at least one ball valve (17), one diaphragm valve, one flap valve (251, 351, 255, 355), and/or by means of the return force the first pressure difference, the second pressure difference, the third pressure difference and/or the fourth pressure difference can be adjusted, and/or
at least one filter element (29, 129, 229, 329), arranged in the first connection line (253), the second connection line (257), the bypass line, the first passage line and/or the second passage line, is provided, wherein preferably
the filter element (29, 129, 229, 329) comprises at least one, in particular multifunctional, filter material of a highly porous structure, such as an activated carbon material, wherein the filter material comprises preferably micropores, in particular of a pore size of less than approximately 2 nm, mesopores, in particular of a pore size of approximately 2 nm to approximately 50 nm, and/or macropores, in particular of a pore size of more than approximately 50 nm, and/or is present at least partly as a, in particular pourable, granulate (147) and/or as a pressed tablet, in particular a charcoal tablet, and/or as a filter cassette which can be arranged in particular inside a filter housing (139), and/or the filter element (129) can be interlocked, by means of at least one interlocking arrangement (151'), with at least one further component of the venting and aerating valve (101'), such as a bypass (135'), a housing and/or a jacket tube, wherein preferably the filter element (129') can be interlocked with the component of the venting and aerating valve (101') as a function of an operating mode of the third valve member (137') and/or the fourth valve member (137'), and/or the interlocking arrangement (151') comprises at least one securing bolt (153') operatively connected to the further component (135') or the filter element, at least one interlocking mechanism (155') operatively connected to the further component and/or the filter element (129'), at least one spring element (157'), at least one securing pin (159'), at least one securing plate (161'), at least one recess (163) and/or at least one actuating pin (167').

7. Venting and aerating valve according to any one of the preceding claims, **characterized by** at least one fluid return line in connection with the valve inlet and/or the combustible fluid tank on the one hand and the valve outlet, the first valve member, the second valve member, the third valve member, the fourth valve member, the first valve closing body, the second valve closing body, the first connection line, the second connection line, the bypass line, the first passage line, the second passage line and/or the filter element on the other hand, and/or
**characterized in that**
the third valve member (23, 137, 259, 359), the fourth valve member (25, 137, 259, 359) and/or the filter element (29, 129, 229, 329) is or are at least sectionally designed as a replacement module.

8. Venting and aerating valve according to any one of the preceding claims, **characterized in that**
the filter element (29, 129, 229, 329) is designed at least partly as a first replacement module (139) which can be inserted into at least one housing (3, 103, 203, 303) of the venting and aerating valve (1, 101, 201, 301), wherein the first replacement module has at least one first geometrical identification mark (149).

9. Venting and aerating valve according to claim 8, **characterized in that** at least one filter housing (139) is provided, wherein the filter housing (139) can be closed preferably by means of a filter lid (141), and at least one, in particular multifunctional, filter material (147), preferably a filter material of a highly porous structure, such as an activated carbon material, is arranged in the filter housing (139) at least temporarily and/or at least partly, wherein the filter material (147) comprises preferably micropores, in particular of a pore size of less than approximately 2 nm, mesopores, in particular of a pore size of approximately 2 nm to approximately 50 nm, and/or macropores, in particular of a pore size of more than approximately 50 nm, and/or is present as a, in particular pourable, granulate (147), as a pressed tablet, in particular a charcoal tablet, and/or as a filter cassette which can be arranged in particular inside the filter housing (139),
the first replacement module comprises, at least partly, the filter housing (139) and/or the filter material (147), in particular the filter cassette,
the first replacement module, the filter housing (139), the filter lid (141) and/or the filter material (147), in particular the filter cassette, comprises or comprise at least sectionally at least a plastic material,
the first geometrical identification mark comprises at least one surface shape, in particular in the form of a groove, an indentation, a raised portion, a circumferential shape, such as a square, circular, rectangular, elliptical and/or conical circumferential shape, wherein preferably the housing (139) and/or a surface of the venting and aerating valve (101) which can be brought into contact with the filter element (129) has a surface shape (135) which is complementary to the geometrical identification mark,
the first geometrical identification mark (143) is representative of a characteristic quantity of the filter element (129), such as a maximum volume flow rate, a minimum volume flow rate, a volume of the filter material, a pore size of the filter material and/or a minimum and/or maximum permissible pressure gradient at the filter elements (129), and/or
the first replacement module and/or the venting and aerating valve is or are designed such that the first replacement module can be removed from and/or introduced into the venting and aerating valve only if a first, a second, a third and/or a fourth valve member of the venting and aerating valve is or are in a closed valve position.

10. Venting and aerating valve according to any one of the preceding claims, **characterized in that**
one valve member, in particular the third valve member and/or the fourth valve member of the venting and aerating valve, is designed at least partly as a second replacement module which can be inserted into at least one housing of the venting and aerating valve, wherein the second replacement module comprises at least one second geometrical identification mark.

11. Venting and aerating valve according to claim 10, **characterized in that** the second geometrical identification mark comprises at least one surface shape, in particular in the form of a groove, an indentation, a raised portion, a circumferential shape, such as a square, circular, rectangular, elliptical and/or conical circumferential shape, wherein preferably the housing and/or a surface of the venting and aerating valve which can be brought into contact with the valve member has a surface shape which is complementary to the second geometrical identification mark, and/or
the second geometrical identification mark is representative of a characteristic quantity of the valve member, such as a maximum pressure difference between an inlet and an outlet of the valve member, at which the valve member is in a closed position, and/or a minimum pressure difference between an inlet and an outlet of the valve member, at which the valve member is in an open position.

12. Combustible fluid tank, in particular with at least one combustible fluid feed line and/or at least one combustible fluid discharge line, comprising at least one vent opening for connecting an interior space of the combustible fluid tank to an atmosphere surrounding the combustible fluid tank, wherein by means of the vent opening a pressure inside the combustible fluid tank, which is higher or lower than an ambient pressure in the surrounding atmosphere, can be adjusted to the ambient pressure, **characterized by** at least one venting and aerating valve (1, 101, 201, 301) according to any one of the preceding claims, which is connected to the vent opening.

13. Method for venting and aerating a combustible fluid tank according to claim 12, comprising
the connection of at least one venting and aerating valve (1, 101, 201, 301) according to any one of claims 1 to 11 to at least one venting and aerating opening of the combustible fluid tank, wherein
at least one valve inlet (5, 105, 205, 305) of the venting and aerating valve (1, 101, 201, 301) is connected to the venting and aerating opening and at least one valve outlet (7, 107, 207, 307) of the venting and aerating valve (1, 101, 201, 301) is connected to an atmosphere surrounding the combustible fluid tank, and in the case of a pressure in the region of the valve inlet (5, 105, 205, 305) being higher by a first pressure difference than a pressure at a valve outlet (7, 107, 207, 307), in a first opening position of the venting and aerating valve (1, 101, 201, 301) a connection between the valve inlet (5, 105, 205, 305) and the valve outlet (7, 107, 207, 307) via a first connection line (253) is opened, in the case of a pressure in the region of the valve inlet (5, 105, 205, 305) being lower by a second pressure difference than a pressure at the valve outlet (7, 107, 207, 307), in a second opening position of the venting and aerating valve (1, 101, 201, 301) a connection between the valve outlet (7, 107, 207, 307) and the valve inlet (5, 105, 205, 305) via a second connection line (257) is opened, and furthermore at least one bypass line is provided in such a manner that the bypass line and the first connection line (253) and/or the bypass line and the second connection line (257) are integrally formed at least sectionally, **characterized in that**
by means of the bypass line an irreversible opening of the connection between the valve inlet and the valve outlet is effected in the case of a malfunction of a first valve member (11, 111, 251, 351) arranged in the first connection line (253) and/or a valve member (15, 255, 355) arranged in the second connecting line (257).

14. Method according to claim 13, **characterized in that**
a connection between the valve inlet (5, 105, 205, 305) and the valve outlet (7, 107, 207, 307) is closed in a closed position of the venting and aerating valve (1, 101, 201, 301) if a pressure at the valve inlet (5, 105, 205, 305) is higher than a pressure at the valve outlet (7, 107, 207, 307) and the pressure difference between the valve inlet (5, 105, 205, 305) and the valve outlet (7, 107, 207, 307) is smaller than the first pressure difference, and/or if a pressure at the valve inlet (5, 105, 205, 305) is lower than a pressure at the valve outlet (7, 107, 207, 307) and the pressure difference between the valve inlet (5, 105, 205, 305) and the valve outlet (7, 107, 207, 307) is smaller than the second pressure difference,
and/or
in the first opening position of the venting and aerating valve (1, 101, 201, 301) the second connection line is closed by means of a second valve member (15, 255, 355), in a second opening position of the venting and aerating valve (1, 101, 201, 301) the first connection line is closed by means of a first valve member (11, 111, 251, 351) and/or in the closed position of the venting and aerating valve (1, 101, 201, 301) the connection between the valve inlet (5, 105, 205, 305) and the valve outlet (7, 107, 207, 307) through the second connection line is closed by means of the second valve member (15, 255, 355) and through the first connection line is closed by means of the first valve member (11, 111, 251, 351).

15. Method according to claim 13 or 14, **characterized in that**
by means of the bypass line the first valve member (11, 111, 251, 351) and/or the second valve member (15, 255, 355) is bypassed and/or by means of a third valve member (23, 137, 259, 359) arranged in the bypass line a connection between the valve inlet (5, 105, 205, 305) and the valve outlet (7, 107, 207, 307) through the bypass line is opened, preferably if a pressure in the region of the valve inlet (5, 105, 205, 305) is higher by a third pressure difference than a pressure at the valve outlet (7, 107, 207, 307), wherein the third pressure difference, in particular in terms of its magnitude, is greater than the first pressure difference, and/or by means of a fourth valve member (25, 137, 259, 359) a connection between the valve inlet (5, 105, 205, 305) and the valve outlet (7, 107, 207, 307) through the bypass line is opened, preferably if a pressure in the region of the valve inlet (5, 105, 205, 305) is lower by a fourth pressure difference than a pressure at the valve outlet (7, 107, 207, 307), wherein the fourth pressure difference, in particular in terms of its magnitude, is greater than the second pressure difference.

## Revendications

1. Soupape de ventilation et d'aération (1, 101, 201, 301, 401) comprenant au moins une entrée de soupape (5, 105, 205, 304, 405) et au moins une sortie de soupape (7, 107, 207, 307, 407), l'entrée de soupape (5, 105, 205, 305, 405) pouvant être reliée avec au moins une ouverture d'un réservoir de fluide combustible, en particulier d'un réservoir de fioul domestique,
l'entrée de soupape (5, 105, 205, 305, 405) pouvant être reliée avec une ouverture d'aération en vue d'une liaison d'un espace intérieur du réservoir de fluide de combustion avec une atmosphère dans laquelle débouche la sortie de soupape (7, 107, 207, 307, 407), la soupape de ventilation et d'aération (1, 101, 201, 301, 401) étant conçue de sorte que, dans le cas où une pression régnant dans le secteur de l'entrée de soupape (5, 105, 205, 305, 405) est supérieure d'une première différence de pression à une pression régnant au niveau de la sortie de soupape (7, 107, 207, 307, 407), une liaison entre l'entrée de soupape (5, 105, 205, 305, 405) et la sortie de soupape (7, 107, 207, 307, 407) est ouverte par l'intermédiaire d'une première conduite de liaison (253), dans laquelle est agencé au moins un premier organe de soupape (11, 111,251,351),
dans le cas où une pression régnant dans le secteur de l'entrée de soupape (5, 105, 205, 305, 405) est inférieure d'une deuxième différence de pression à une pression régnant au niveau de la sortie de soupape (7, 107, 207, 307, 407), dans une deuxième position d'ouverture de la soupape de ventilation et d'aération (1, 101, 201, 301, 401), une liaison entre la sortie de soupape (7, 107, 207, 307, 407) et l'entrée de soupape (5, 105, 205, 305, 405) est ouverte par l'intermédiaire d'une deuxième conduite de soupape (257), dans laquelle est agencé au moins un deuxième organe de soupape (15, 255, 355), au moins une conduite de by-pass entourant le premier organe de soupape (11, 111, 251, 351) et le deuxième organe de soupape (15, 255, 355) et fournissant une liaison entre l'entrée de soupape (5, 105, 205, 305, 405) et la sortie de soupape (7, 107, 207, 307, 407) étant en outre prévue, et
la conduite de by-pass et la première conduite de liaison (253) et/ou la conduite de by-pass et la deuxième conduite de liaison (257) étant au moins localement conçues en un seul bloc, **caractérisé en ce que**
dans le cas d'un fonctionnement défectueux du premier organe de soupape (11, 111, 251, 351) et/ou du deuxième organe de soupape (15, 255, 355), une ouverture irréversible de la liaison entre l'entrée de soupape et la sortie de soupape peut être effectuée par l'intermédiaire de la conduite de by-pass.

2. Soupape de ventilation et d'aération selon la revendication 1, **caractérisée en ce que** la soupape de ventilation et d'aération (1, 101, 201, 301) est conçue de sorte qu'une liaison entre l'entrée de soupape (5, 105, 205, 305) et la sortie de soupape (7, 107, 207, 307) est fermée dans une position fermée de la soupape de ventilation et d'aération (1, 101, 201, 301), lorsqu'une pression régnant au niveau de l'entrée de soupape (5, 105, 205, 305) est supérieure à une pression au niveau de la sortie de soupape (7, 107, 207, 307) et la différence de pression entre l'entrée de soupape (5, 105, 205, 305) et la sortie de soupape (7, 107, 207, 307) est inférieure à la première différence de pression, et/ou
lorsqu'une pression régnant au niveau de l'entrée de soupape (5, 105, 205, 305) est inférieure à une pression au niveau de la sortie de soupape (7, 107, 207, 307) et la différence de pression entre l'entrée de soupape (5, 105, 205, 305) et la sortie de soupape (7, 107, 207, 307) est inférieure à la deuxième différence de pression,
dans la première position d'ouverture de la soupape de ventilation et d'aération (1, 101, 201, 301), une liaison entre l'entrée de soupape (5, 105, 205, 305) et la sortie de soupape (7, 107, 207, 307) est ouverte grâce à la première conduite de liaison (253) au moyen du premier organe de soupape, de préférence pour permettre un écoulement d'air de l'entrée de soupape (5, 105, 205, 305) vers la sortie de soupape (7, 107, 207, 307) et/ou
dans la deuxième position d'ouverture de la soupape de ventilation et d'aération (1, 101, 201, 301), une liaison entre la sortie de soupape (7, 107, 207, 307) et l'entrée de soupape (5, 105, 205, 305) est ouverte au moyen du deuxième organe de soupape (15, 255, 355), de préférence pour permettre un écoulement d'air de la sortie de soupape (7, 107, 207, 307) vers l'entrée de soupape (5, 105, 205, 305),
la deuxième conduite de liaison (257) étant de préférence fermée au moyen du deuxième organe de soupape (15, 255, 355) dans la première position d'ouverture de la soupape de ventilation et d'aération (1, 101, 201, 301), la première conduite de liaison (253) étant de préférence fermée au moyen du premier organe de soupape (11, 111, 251, 351) dans la deuxième position d'ouverture de la soupape de ventilation et d'aération (1, 101, 201, 301) et/ou, dans la position fermée de la soupape de ventilation et d'aération (1, 101, 201, 301), la liaison entre l'entrée de soupape (5, 105, 205, 305) et la sortie de soupape (7, 107, 207, 307) à travers la deuxième conduite de liaison (257) étant de préférence fermée au moyen du deuxième organe de soupape (15, 255, 355), et étant de préférence également fermée à travers la première conduite de liaison (253) au moyen du premier organe de soupape (11, 111,251,351).

3. Soupape de ventilation et d'aération selon la revendication 2, **caractérisée en ce que**
la première conduite de liaison (253) et la deuxième conduite de liaison (257) et/ou le premier organe de soupape et le deuxième organe de soupape sont au moins par endroit conçus en un seul bloc, et la première position d'ouverture et la deuxième position d'ouverture de la soupape de ventilation et d'aération sont en particulier identiques,
le premier organe de soupape comprend au moins un premier clapet de soupape (11, 111, 251, 351), au moyen duquel une première ouverture traversante (13, 113) dans la première conduite de liaison peut être fermée, au moins une première conduite traversante (21) étant de préférence réalisée dans le premier clapet de soupape (11), qui forme au moins partiellement la deuxième conduite de liaison, et le deuxième organe de soupape (15), comprenant de préférence au moins un deuxième clapet de soupape (17) au moyen duquel au moins une deuxième ouverture traversante (19) de la première conduite traversante (21) peut être fermée, est agencé en particulier dans la première conduite traversante (21), et/ou le deuxième organe de soupape comprend au moins un deuxième clapet de soupape, au moyen duquel une deuxième ouverture traversante dans la deuxième conduite de liaison peut être fermée, au moins une deuxième conduite traversante, qui forme au moins partiellement la première conduite de liaison, étant de préférence réalisée dans le deuxième clapet de soupape et le premier organe de soupape, comprenant de préférence au moins un premier clapet de soupape, au moyen duquel au moins une première ouverture traversante de la deuxième conduite traversante peut être fermée, est en particulier agencée dans la deuxième conduite traversante.

4. Soupape de ventilation et d'aération selon l'une quelconque des revendications précédentes, **caractérisée en ce que**
au moins un troisième organe de soupape (23, 137, 259, 359) agencé dans la conduite de by-pass et/ou au moins un quatrième organe de soupape (25, 137, 259, 359) agencé dans la conduite de by-pass, le troisième organe de soupape (3, 137, 259, 359) étant conçu de sorte qu'une liaison entre l'entrée de soupape (5, 105, 205, 305) et la sortie de soupape (7, 107, 207, 307) à travers la conduite de by-pass soit débloquée au moyen du troisième organe de soupape (23, 137, 259, 359), lorsqu'une pression régnant dans le secteur de l'entrée de soupape (5, 105, 205, 305) est supérieure d'une troisième différence de pression à une pression régnant au niveau de la sortie de soupape (7, 107, 207, 307), la troisième différence de pression, en particulier quantitativement, étant supérieure à la première différence de pression, et/ou le quatrième organe de soupape (25, 137, 259, 359) étant conçu de sorte qu'une liaison entre l'entrée de soupape (5, 105, 205, 305) et la sortie de soupape (7, 107, 207, 307) à travers la conduite de by-pass est débloquée au moyen du quatrième organe de soupape (25, 137, 259, 359), lorsqu'une pression régnant dans le secteur de l'entrée de soupape (5, 105, 205, 305) est inférieure d'une quatrième différence de pression à une pression régnant au niveau de la sortie de soupape (7, 107, 207, 307), la quatrième différence de pression, en particulier quantitativement, étant supérieure à la deuxième différence de pression,
de préférence le troisième organe de soupape (137, 259, 359) et/ou le quatrième organe de soupape (137, 259, 359) étant conçu au moins par endroit en un seul bloc, le troisième organe de soupape et/ou le quatrième organe de soupape comprenant au moins une fenêtre de rupture (23, 25, 137, 259, 359) et/ou le troisième et/ou quatrième organe de soupape comprenant un insert (435) monté mobile dans un carter (403) de la soupape de ventilation et d'aération.

5. Soupape de ventilation et d'aération selon la revendication 4, **caractérisée en ce que** dans une première position de l'insert (435) par rapport au carter (403), une liaison de l'entrée de soupape (405) et/ou de la sortie de soupape (407) est fermée par un compartiment intermédiaire, qui est formé en particulier par endroit entre l'insert (435) et le carter (403) et/ou forme par endroit la conduite de by-pass (443) est fermée, la liaison du compartiment intermédiaire (443) et de la sortie de la soupape (407) et/ou de l'entrée de soupape (405) est ouverte de préférence au moyen d'un élément d'étanchéité (439) agencé entre l'insert (435) et le carter (403) et dans au moins une deuxième position de l'insert (435) par rapport au carter (403), la liaison du compartiment intermédiaire (443) et de la sortie de la soupape (407) et/ou de l'entrée de soupape (405) est ouverte, la première position et la deuxième position se différenciant en particulier par le fait que l'ensemble de l'insert (435) est agencé à l'intérieur du carter (403) dans différentes positions et/ou au moins un composant (441) de l'insert (435), en particulier après une séparation au moins partielle d'au moins un autre composant (429) de l'insert (435) et/ou après un mouvement relatif par rapport aux autres composants dans différentes positions, est agencé à l'intérieur du carter (403) dans différentes positions, et/ou la première position et/ou la deuxième position pouvant être indiquée au moyen d'au moins un indicateur (445).

6. Soupape de ventilation et d'aération selon l'une quelconque des revendications précédentes, **caractérisée en ce que**
le premier organe de soupape (111, 251, 351), le deuxième organe de soupape (15, 255, 355), le troisième organe de soupape (23, 137, 259, 359) et/ou le quatrième organe de soupape (25, 137, 259, 359), en particulier le premier clapet de soupape (11) et/ou le deuxième clapet de soupape (17) est et/ou sont contraint(s) dans une position de fermeture au moyen d'au moins une force de rappel, la force de rappel comprenant de préférence une force gravitationnelle, une force produite au moyen d'au moins un élément de rappel, comme un élément élastique et/ou une force de pression, et/ou comprenant au moins une soupape à bille (17), une soupape à membrane, une soupape à clapet (251, 351, 255, 355) et/ou la première différence de pression, la deuxième différence de pression, la troisième différence de pression et/ou la quatrième différence de pression pouvant être ajustée(s) au moyen de la force de rappel, et/ou
au moins un élément filtrant (29, 129, 229, 32), agencé dans la première conduite de liaison (253), la deuxième conduite de liaison (257), la conduite de by-pass, la première conduite traversante et/ou la deuxième conduite traversante, est prévue,
l'élément de filtrant (29, 129, 229, 329) comprenant de préférence au moins un matériau filtrant, en particulier multifonctionnel, présentant une structure à porosité élevée, comme un matériau à base de charbon actif, le matériau filtrant comprenant de préférence des micropores, en particulier avec une taille de pore inférieure à environ 2 nm, des mésopores, en particulier avec une taille de pore d'environ 2 nm à environ 50 nm, et/ou des macropores, en particulier avec une taille de pore supérieure à environ 50 nm, et/ou étant présent au moins partiellement sous forme de granulés (147), en particulier déversable, et/ou sous forme de pastilles comprimées, en particulier de comprimés de charbon et/ou sous forme de cassettes de filtration pouvant être en particulier agencées dans un carter de filtration (139), et/ou l'élément filtrant (129) pouvant être verrouillé avec au moins un autre composant de la soupape de ventilation et d'aération (101'), au moyen d'au moins un dispositif de verrouillage (151'), comme une conduite de dérivation (135'), un carter, et/ou un tube d'enveloppe, l'élément filtrant (129') pouvant être verrouillé, de préférence en fonction d'un état de fonctionnement du troisième organe de soupape (57') et/ou du quatrième organe de soupape (137'), avec le composant de la soupape de ventilation et d'aération (101') et/ou le dispositif de verrouillage (151') comprenant au moins une cheville de sécurité (153') se trouvant en liaison fonctionnelle avec le autre composant (135') ou l'élément filtrant, au moins un mécanisme de verrouillage (155') se trouvant en liaison fonctionnelle avec le autre composant et/ou l'élément filtrant (129'), au moins un élément élastique (157'), au moins une goupille de sécurité (159'), au moins une plaque de sécurité (161'), au moins un évidement (163) et/ou au moins une goupille d'actionnement (167').

7. Soupape de ventilation et d'aération selon l'une quelconque des revendications précédentes, **caractérisée par**
au moins une conduite de reflux de fluide en liaison avec l'entrée de soupape et/ou le réservoir de fluide combustible d'une part et la sortie de soupape, le premier organe de soupape, le deuxième organe de soupape, le troisième organe de soupape, le quatrième organe de soupape, le premier clapet de soupape, le deuxième clapet de soupape, la première conduite de liaison, la deuxième conduite de liaison, la conduite de by-pass, la première conduite traversante, la deuxième conduite traversante et/ou l'élément filtrant d'autre part et/ou
**caractérisée en ce que**
le troisième organe de soupape (23, 137, 259, 359), le quatrième organe de soupape (25, 137, 259, 359) et/ou l'élément filtrant (29, 129, 229, 329) est ou sont réalisé(s) au moins par endroit sous la forme d'un module d'échange.

8. Soupape de ventilation et d'aération selon l'une quelconque des revendications précédentes, **caractérisée en ce que**
l'élément filtrant (29, 129, 229, 329) est réalisé au moins partiellement sous la forme d'un premier module d'échange (139) pouvant être inséré dans au moins un carter (3, 103, 203, 303) de la soupape de ventilation et d'aération (1, 101, 201, 301), le premier module d'échange présentant au moins un premier marquage d'identification (149) géométrique.

9. Soupape de ventilation et d'aération selon la revendication 8, **caractérisée en ce que** au moins un carter de filtrage (139) est prévu, le carter de filtrage (139) pouvant être fermé de préférence au moyen d'un bouchon filtre (141), et au moins un matériau filtrant (147), en particulier multifonctionnel, de préférence un matériau filtrant présentant une structure à porosité élevée, comme un matériau à base de charbon actif, étant agencé au moins temporairement et/ou au moins partiellement dans le carter de filtrage, le matériau filtrant (147) comprenant de préférence des micropores, en particulier avec une taille de pore inférieure à environ 2 nm, des mésopores, en particulier avec une taille de pore d'environ 2 nm à environ 50 nm, et/ou des macropores, en particulier avec une taille de pore supérieure à environ 50 nm, et/ou étant présent sous forme de granulés (147), en particulier déversable, sous forme de pastilles comprimées, en particulier sous forme de comprimés de charbon, et/ou sous forme de cassette de filtrage pouvant être en particulier agencée dans le carter de filtrage (139),
le premier module d'échange comprend au moins partiellement le carter de filtrage (139) et/ou le matériau filtrant (147), en particulier la cassette de filtrage,
le premier module d'échange, le carter de filtrage (39), le bouchon-filtre (141) et/ou le matériau filtrant (147), en particulier la cassette de filtrage, comprennent au moins par secteur au moins un matériau plastique,
le premier marquage d'identification géométrique comprend au moins une forme de surface, en particulier sous la forme d'une rainure, d'un renfoncement, d'une saillie, d'une forme circonférentielle, comme une forme circonférentielle carrée, circulaire, rectangulaire, elliptique et/ou conique, le carter (139) et/ou une surface, pouvant être mise en contact avec l'élément filtrant (129), de la soupape de ventilation ou d'aération (101) présentant de préférence une forme de surface (135) complémentaire au marquage d'identification géométrique,
le premier marquage d'identification (143) géométrique est représentatif d'une taille caractéristique de l'élément filtrant (129), comme un débit volumique maximal, un débit volumique minimal, un volume du matériau filtrant, une taille de pore du matériau filtrant et/ou un gradient de pression minimal et/ou maximal autorisé au niveau de l'élément filtrant (129), et/ou
le premier module d'échange et/ou la soupape de ventilation et d'aération est ou sont réalisés de sorte que le premier module d'échange ne peut être retiré de la soupape de ventilation et d'aération et/ou ne peut être introduit dans la soupape de ventilation et d'aération que lorsqu'un premier, un deuxième, un troisième et/ou un quatrième organe de soupape de la soupape de ventilation et d'aération est ou sont dans une position de soupape fermée.

10. Soupape de ventilation et d'aération selon l'une quelconque des revendications précédentes, **caractérisée en ce que**
un organe de soupape, en particulier le troisième organe de soupape et/ou le quatrième organe de soupape de la soupape de ventilation et d'aération est réalisé au moins partiellement sous la forme d'un deuxième module d'échange qui peut être inséré dans au moins un carter e la soupape de ventilation et d'aération, le deuxième module d'échange présentant au moins un deuxième marquage d'identification géométrique.

11. Soupape de ventilation et d'aération selon la revendication 10, **caractérisée en ce que** le deuxième marquage d'identification géométrique comprend au moins une forme de surface, en particulier sous la forme d'une rainure, d'un renfoncement, d'une saillie, d'une forme circonférentielle, comme une forme circonférentielle carrée, circulaire, rectangulaire, elliptique et/ou conique, le carter et/ou une surface, pouvant être mise en contact avec l'organe de soupape, de la soupape de ventilation et d'aération présentant de préférence une forme de surface complémentaire au deuxième marquage d'identification géométrique et/ou,
le deuxième marquage d'identification géométrique est représentatif d'une grandeur caractéristique de l'organe de soupape, comme une différence de pression maximale entre une entrée et une sortie de l'organe de soupape, dans lequel l'organe de soupape est dans une position fermée et/ou comme une différence de pression minimale entre une entrée et une sortie de l'organe de soupape dans lequel, l'organe de soupape est dans une position ouverte.

12. Réservoir de fluide combustible, en particulier comprenant au moins une conduite d'acheminement de fluide combustible et/ou au moins une conduite de vidange de fluide combustible, comprenant au moins une ouverture de ventilation en vue du raccordement d'un espace intérieur du réservoir de fluide combustible avec une atmosphère entourant le réservoir de fluide combustible, une pression présente dans le réservoir de fluide combustible, qui est supérieure ou inférieure à une pression environnante dans l'atmosphère environnante, pouvant être adaptée à la pression environnante au moyen de l'ouverture de ventilation, **caractérisé par** au moins une soupape de ventilation et d'aération (1, 101, 201, 301), reliée avec l'ouverture de ventilation, selon l'une quelconque des revendications précédentes.

13. Procédé de ventilation et d'aération d'un réservoir de fluide combustible selon la revendication 12, comprenant
la liaison d'au moins une soupape de ventilation et d'aération (1, 101, 201, 301),
selon l'une quelconque des revendications 1 à 11, avec au moins une ouverture de ventilation et d'aération du réservoir de fluide combustible,
au moins une entrée de soupape (5, 105, 205, 305) de la soupape de ventilation et d'aération (1, 101, 201, 301) étant reliée avec l'ouverture de ventilation et d'aération et au moins une sortie de soupape (7, 107, 207, 307) de la soupape de ventilation et d'aération (1, 101, 201, 301) étant reliée avec une atmosphère entourant le réservoir de fluide combustible, et, dans le cas où une pression régnant dans le secteur de l'entrée de soupape (5, 105, 205, 305) est supérieure d'une première différence de pression à une pression régnant au niveau d'une sortie de soupape (7, 107, 207, 307) dans une première position d'ouverture de la soupape de ventilation et d'aération (1, 101, 201, 301), une liaison entre l'entrée de soupape (5, 105, 205, 305) et la sortie de soupape (7, 107, 207, 307) étant ouverte par l'intermédiaire d'une première conduite de liaison (253), et, dans le cas où une pression régnant dans le secteur de l'entrée de soupape (5, 105, 205, 305) est inférieure d'une deuxième différence de pression à une pression régnant au niveau de la sortie de soupape (7, 107, 207, 307), une liaison entre la sortie de soupape (7, 107, 207, 307) et l'entrée de soupape (5, 105, 205, 305) étant ouverte par l'intermédiaire d'une deuxième conduite de liaison (257), et au moins une conduite de by-pass étant en outre fournie de sorte que la conduite de by-pass et la première conduite de liaison (253) et/ou la conduite de by-pass et la deuxième conduite de liaison (257) sont réalisées au moins par endroit en un seul bloc, **caractérisé en ce que**
en cas de fonctionnement défectueux d'un premier organe de soupape (11, 111, 251, 351) agencé dans la première conduite de liaison (253) et/ou d'un organe de soupape (15, 255, 355) agencé dans la deuxième conduite de liaison (257), une ouverture irréversible de la liaison entre l'entrée de soupape et la sortie de soupape est effectuée au moyen de la conduite de by-pass.

14. Procédé selon la revendication 13, **caractérisé en ce que** une liaison entre l'entrée de soupape (5, 105, 205, 305) et la sortie de soupape (7, 107, 207, 307) est fermée dans une position fermée de la soupape de ventilation et d'aération (1, 101, 201, 301), lorsqu'une pression régnant au niveau de l'entrée de soupape (5, 105, 205, 305) est supérieure à une pression au niveau de la sortie de soupape (7, 107, 207, 307) et la différence de pression entre l'entrée de soupape (5, 105, 205, 305) et la sortie de soupape (7, 107, 207, 307) est inférieure à la première différence de pression, et/ou lorsqu'une pression régnant au niveau de l'entrée de soupape (5, 105, 205, 305) est inférieure à une pression au niveau de la sortie de soupape (7, 107, 207, 307) et la différence de pression entre l'entrée de soupape (5, 105, 205, 305) et la sortie de soupape (7, 107, 207, 307) est inférieure à la deuxième différence de pression et/ou
dans la première position d'ouverture de la soupape de ventilation et d'aération (1, 101, 201, 301), la deuxième conduite de liaison est fermée au moyen d'un deuxième organe de soupape (15, 255, 355), dans la deuxième position d'ouverture de la soupape de ventilation et d'aération (1, 101, 201, 301), la première conduite de liaison est fermée au moyen d'un premier organe de soupape (11, 111, 251, 351) et/ou dans la position fermée de la soupape de ventilation et d'aération (1, 101, 201, 301), la liaison entre l'entrée de soupape (5, 105, 205, 305) et la sortie de soupape (7, 107, 207, 307) est fermée à travers la deuxième conduite de liaison au moyen du deuxième organe de soupape (15, 255, 355) et est également fermée à travers la première conduite de liaison au moyen du premier organe de soupape (11, 111, 251, 351).

15. Procédé selon la revendication 13 ou 14, **caractérisé en ce que** au moyen de la conduite de by-pass, le premier organe de soupape (11, 111, 251, 351) et/ou le deuxième organe de soupape (15, 255, 355) est contourné et/ou, une liaison entre l'entrée de soupape (5, 105, 205, 305) et la sortie de soupape (7, 107, 207, 307) est débloquée à travers la conduite de by-pass au moyen d'un troisième organe de soupape (23, 137, 259, 359) agencé dans la conduite de by-pass, de préférence lorsqu'une pression régnant dans le secteur de l'entrée de soupape (5, 105, 205, 305) est supérieure d'une troisième différence de pression à une pression régnant au niveau de la sortie de soupape (7, 107, 207, 307), la troisième différence de pression, en particulier quantitativement, est supérieure à la première différence de pression, et/ou une liaison entre l'entrée de soupape (5, 105, 205, 305) et la sortie de soupape (7, 107, 207, 307) est débloquée à travers la conduite de by-pass, au moyen d'un quatrième organe de soupape (25, 137, 259, 359), de préférence lorsqu'une pression régnant dans le secteur de l'entrée de soupape (5, 105, 205, 305) est inférieure d'une quatrième différence de pression à une pression régnant au niveau de la sortie de soupape (7, 107, 207, 307), la quatrième différence de pression, en particulier quantitativement, étant supérieure à la deuxième différence de pression.
